# EUROPÄISCHE PATENTSCHRIFT

(11) **EP 3 251 892 B1**
(45) Veröffentlichungstag und Bekanntmachung des Hinweises auf die Patenterteilung: **29.01.2020**
(21) Anmeldenummer: 16171980.2
(22) Anmeldetag: 30.05.2016
(51) Int. Cl.: B60N 2/60, B32B 5/02, B32B 7/04, B32B 27/30, B32B 37/14, B32B 38/00, B32B 38/04, B32B 3/04

(54) **FAHRZEUGSITZ-SCHUTZBEZUG, VERFAHREN ZUR HERSTELLUNG EINES FAHRZEUGSITZ-SCHUTZBEZUGES UND VERFAHREN ZUR VERWENDUNG EINES FAHRZEUGSITZ-SCHUTZBEZUGES**
VEHICLE SEAT PROTECTIVE COVER, METHOD FOR PRODUCING A VEHICLE SEAT PROTECTIVE COVER AND METHOD FOR USE OF A VEHICLE SEAT PROTECTIVE COVER
HOUSSE DE PROTECTION DE SIEGE DE VEHICULE, PROCEDE DE PRODUCTION D'UNE HOUSSE DE PROTECTION DE SIEGE DE VEHICULE ET SON PROCEDE D'UTILISATION

(43) Veröffentlichungstag der Anmeldung: 06.12.2017
(73) Patentinhaber: Horn & Bauer GmbH & Co. KG, 34613 Schwalmstadt (DE)
(72) Erfinder: Mohr, Thomas, 35279 Neustadt-Momberg (DE)
(74) Vertreter: REHBERG HÜPPE + PARTNER

(56) Entgegenhaltungen:
- EP-A1- 2 913 224
- DE-T2- 69 022 404
- GB-A- 1 139 794
- JP-A- H0 838 313

## Beschreibung

Die Erfindung betrifft einen Fahrzeugsitz-Schutzbezug. Derartige Fahrzeugsitz-Schutzbezüge werden über Fahrzeugsitze gestülpt oder gezogen, um eine Verschmutzung des Fahrzeugsitzes, insbesondere durch Monteure, andere Personen oder Verschmutzungen der Umgebung, zu vermeiden. Fahrzeugsitz-Schutzbezüge werden bspw. verwendet in Automobilwerkstätten, wenn an Fahrzeugen eine Inspektion oder Reparatur durchgeführt wird. Darüber hinaus finden Fahrzeugsitz-Schutzbezüge Einsatz zur Vermeidung einer Verschmutzung des Fahrzeugsitzes beim Hersteller des Fahrzeugsitzes sowie bei der Zulieferung des Fahrzeugsitzes zum Automobilwerk, wobei hier auch eine Handhabung des Fahrzeugsitzes durch einen Roboter erfolgen kann und ein Schutzbezug Kontaktflächen zwischen Greif- oder Halteelementen des Roboters und dem Fahrzeugsitz hinsichtlich Verschmutzungen und/oder Beschädigungen schützen kann. Auch während der Montage des Fahrzeugs kommt eine Vielzahl von Monteuren nacheinander mit den Fahrzeugsitzen in Berührung. Schließlich muss das fertig montierte Fahrzeug vom Band gefahren, auf Lastkraftwagen oder Eisenbahnwaggons aufgefahren und letztendlich beim Fahrzeughändler noch mehrmals gehandhabt werden, bis das Fahrzeug in möglichst sauberem Zustand in die Hand des Erwerbers ausgeliefert werden kann. Von der Herstellung des Fahrzeugsitzes beim Zulieferer bis zur Auslieferung des Fahrzeugs an den Erwerber kommt der Fahrzeugsitz unter Umständen 30 bis 35 Mal in Kontakt mit Monteuren oder anderen Personen, so dass eine erhebliche Verschmutzungsgefahr besteht, welche mittels eines Fahrzeugsitz-Schutzbezuges vermieden werden soll.

Die Erfindung betrifft auch ein Verfahren zur Herstellung eines derartigen Fahrzeugsitz-Schutzbezuges. Des Weiteren betrifft die Erfindung ein Verfahren zur Verwendung eines Fahrzeugsitz-Schutzbezuges.

### STAND DER TECHNIK

DE 199 23 889 C2 beschreibt als Stand der Technik einen Fahrzeugsitz-Schutzbezug aus doppellagiger Kunststofffolie, nämlich einer Vorderlage und einer Rücklage, gemäß DE 41 32 714 A1**.** Bei diesem Fahrzeugsitz-Schutzbezug sind die zwei Taschen bildenden Bereiche der Rücklage durch Verbindungsstreifen verbunden, die sich über die freien Ränder der die Taschen bildenden Bereiche entlang von Querschweißungen erstrecken. Die Verbindungsstreifen sind auch mit der Vorderlage verbunden, so dass die somit im Wesentlichen durchgehende Rücklage eine randgeschlossene Ausnehmung aufweist. Die Vorderlage und die Rücklage weisen damit gleich große Umrisse auf und sind miteinander an allen vier Kanten durchgehend verbunden, also sowohl im Bereich der Querschweißungen als auch im Bereich der Längsränder. Während die Vorderlage durchgehend geschlossen ausgebildet ist, ist in der Rücklage die randgeschlossene Ausnehmung vorgesehen, die allseits mit Abstand zum Umriss des flachliegenden Fahrzeugsitz-Schutzbezuges angeordnet ist und die einzige Öffnung darstellt, mit deren Hilfe der Fahrzeugsitz-Schutzbezug über die Rückenlehne und das Sitzpolster gestülpt werden kann. Durch die Verbindungsstreifen werden neben den beiden bisher bekannten Taschen zusätzliche, die Taschen verbindende Quertaschen geschaffen, die das Sitzpolster und die Rückenlehne in Übergangsbereichen hintergreifen und damit einen wirksamen Schutz dieser gefährdeten Stellen des Fahrzeugsitzes gegen Verschmutzung darstellen. Die Verrutschungsgefahr bei Benutzung des Fahrzeugsitzes, der mit einem Fahrzeugsitz-Schutzbezug geschützt ist, ist praktisch beseitigt. Trotzdem wird bei der Herstellung dieses Fahrzeugsitz-Schutzbezuges jegliche Handarbeit vermieden. Auch entfällt die zusätzliche Verwendung von Gummibändern, Folienstreifen u. dgl. und es erübrigt sich ein zusätzlicher Montageaufwand. Beim Überstülpen des Fahrzeugsitz-Schutzbezuges gelangt dieser vielmehr automatisch in seine das Sitzpolster sowie die Rückenlehne umhüllende Schutzstellung. Durch die Querschweißung wird die Vorderlage mit der Rücklage an jedem Sitz durchgehend verbunden. Andererseits kann die Querschweißung jedoch so erfolgen, dass die einzelnen Fahrzeugsitz-Schutzbezüge dabei zugleich voneinander abgetrennt werden, so dass sie in einem Stapel übereinander geschichtet abgelegt werden und auch in dieser Weise in einen Versand zu einem Hersteller des Fahrzeugsitzes, zu einem Fahrzeughersteller oder zu einer Werkstatt gelangen können. Daneben ist es aber auch möglich, die einzelnen Fahrzeugsitz-Schutzbezüge über Perforationen aneinander hängend zu lassen und eine solche Endlosbahn auf einer Vorratsrolle aufzuwickeln. Ein ungewolltes Lösen oder Herabfallen des Fahrzeugsitz-Schutzbezuges von dem Fahrzeugsitz soll dadurch vermieden werden, dass als gesondertes Teil zu dem Fahrzeugsitz-Schutzbezug ein Gummiband verwendet wird, welches nach dem Überstülpen des Fahrzeugsitz-Schutzbezuges als geschlossene Schleife so über die Rückenlehne geführt wird, dass das Gummiband im Übergangsbereich zwischen Sitzpolster und Rückenlehne anliegt. Gleichzeitig wird die Vorderlage des Sitzbezuges im Übergangsbereich zwischen Sitzpolster und Rückenlehne durch das Gummiband fixiert, so dass einer Verrutschungsgefahr entgegengewirkt wird. Alternativ wird vorgeschlagen, dass etwa im Mittelbereich des freien Rands der Tasche, die die Rückenlehne umschließt, zwei Folienstreifen angeschweißt werden. Die beiden Folienstreifen können dann nach dem Überstülpen des Fahrzeugsitz-Schutzbezuges über den Fahrzeugsitz nach vorne geschlungen und dort miteinander verknotet werden, womit ein engeres Anliegen der Vorderlage des Sitzbezuges im Übergangsbereich zwischen Sitzpolster und Rückenlehne gewährleistet werden kann.

Gemäß DE 199 23 889 C2 wird ein weiterer bekannter Fahrzeugsitz-Schutzbezug zunächst so hergestellt, wie es in DE-AS 16 30 878 beschrieben ist. Nach dem Zerteilen einer Kunststoffbahn in die einzelnen Fahrzeugsitz-Schutzbezüge erfolgt ein Anschweißen eines Halbschlauchs entlang der freien Ränder der von der Rücklage gebildeten Taschen sowie entlang der freien Ränder der Vorderlage in dem von den Taschen nicht abgedeckten Bereich. Beim Anschweißen des Halbschlauchs wird ein Gummiband in Form einer Schleife eingelegt. Mit diesem Gummiband wird an dem Fahrzeugsitz-Schutzbezug dann eine Öffnung geschaffen, die zum Überstülpen auf den Fahrzeugsitz genutzt wird. Das Gummiband übt dann eine gewisse Straffungswirkung aus, so dass insbesondere die Vorderlage des Fahrzeugsitz-Schutzbezuges näher an dem Sitzpolster und an der Rückenlehne gehalten ist. Ein solcher Fahrzeugsitz-Schutzbezug ist durch das Anschweißen des Halbschlauchs mit dem Gummiband, welches in Handarbeit durchgeführt wird, besonders aufwändig und teuer, erbringt aber andererseits eine gute Schutzwirkung. Das Überstülpen eines solchen Fahrzeugsitz-Schutzbezuges über einen Fahrzeugsitz ist jedoch vergleichsweise schwieriger durchzuführen als bei dem zuvor beschriebenen Fahrzeugsitz-Schutzbezug.

DE 199 23 889 C2 beschreibt es auch als bekannt, ein Gummiband auf den Rand einer randgeschlossenen Ausnehmung eines Sitzbezuges aus Kunststofffolie aufzunähen. Das Aufnähen geschieht in Handarbeit und unter Fixierung des Gummibands unter Vorspannung. Dies hat zur Folge, dass das Gummiband als elastischer Fremdkörper die unelastische Folie unter Faltenbildung zusammenzieht. Dies stört nicht nur optisch, sondern verhindert auch bereits das Aufwickeln auf eine Rolle. Selbst als Einzelstücke im Stapel lassen sich solche Fahrzeugsitz-Schutzbezüge nur schwer handhaben. Weitere Nachteile dieser Ausführungsform sind ein faltiger Sitz auf dem Fahrzeugsitz, eine Störanfälligkeit für elektronische Schranken und eine Ein- und Weiterreißgefahr der Folie.

Schließlich beschreibt DE 199 23 889 C2 auch als bekannt einen Fahrzeugsitz-Schutzbezug für Fahrzeugsitze gemäß DE-OS 19 20 529**,** der aus einem allseitig elastisch dehnbaren Untergarngewebe mit hoher Rückdehnung und mit in gedehntem Zustand des elastischen Garngewebes eingestrickter hochfloriger Wolle oder einem ähnlichen Material besteht. Infolge der großen Dehnbarkeit ist ein derartiger Fahrzeugsitz-Schutzbezug einfach in der Handhabung und kann leicht auf den Fahrzeugsitz aufgebracht werden. Der Fahrzeugsitz-Schutzbezug kann als Universal-Fahrzeugsitz-Schutzbezug ausgebildet sein, der sich auch Fahrzeugsitzen unterschiedlicher Geometrie anpassen kann. Der Fahrzeugsitz-Schutzbezug kann in diesem Fall aus mehreren Teilen oder Lagen bestehen, wobei in einer der Lagen eine Öffnung vorgesehen ist, um den Fahrzeugsitz-Schutzbezug sowohl über die Rückenlehne als auch über das Sitzpolster ziehen zu können.

Vor diesem Hintergrund schlägt DE 199 23 889 C2 vor, zumindest die Rücklage des Fahrzeugsitz-Schutzbezuges ganz oder teilweise aus einer elastischen, rückstellfähigen Kunststofffolie herzustellen. Die Elastizität der Rücklage soll genutzt werden, um das Abnehmen und Wiederanlegen des Fahrzeugsitz-Schutzbezuges zu ermöglichen, insbesondere im Zusammenhang mit der Montage des Kraftfahrzeugsitzes, zur Gewährleistung der Erreichbarkeit von Befestigungsschrauben des Fahrzeugsitzes, für den Einbau einer Schublade, eines Feuerlöschers u. ä. Infolge der Elastizität kann der Fahrzeugsitz-Schutzbezug auch in seinen Dimensionen etwas kleiner hergestellt werden als bisher. Die Elastizität erbringt dennoch eine leichte Handhabung beim Überstülpen und einen verbesserten Sitz des Fahrzeugsitz-Schutzbezuges. Darüber hinaus legt sich der Fahrzeugsitz-Schutzbezug in übergestülptem Zustand exakt an die Kontur des Kraftfahrzeug-Sitzes an. Damit entfällt eine Störmöglichkeit, wenn z. B. die richtige Position des Fahrzeugsitzes im Fahrzeug mit elektronischen Schranken vermessen und geprüft wird. Überhängende Folienbereiche oder Falten des Fahrzeugsitz-Schutzbezuges können nicht mehr zu einer Störung führen. Der Fahrzeugsitz-Schutzbezug kann schnell und sicher sowie faltenfrei mit die Konturen des Fahrzeugsitzes eng umschließendem Sitz aufgezogen werden. Vorgeschlagen wird vorzugsweise die Ausstattung der die Rücklage bildenden Kunststofffolie mit einer elastischen Dehnung von mindestens 50 %, vorzugsweise mindestens 60 %. Einsatz findet als Material für das Folienmaterial der Rücklage ein Copolymer, insbesondere aus EthylenVinylacetat oder Butylen-Vinylacetat, wobei auch andere Materialien den Anforderungen genügen können, beispielsweise auch ein thermoplastisches Elastomer oder ein besonders elastisches Low-Density Material, welches zumindest schichtweise oder in Abmischungen oder zu 100 % eingesetzt sein kann. Vorgeschlagen wird darüber hinaus, dass die elastische Rücklage mit einer Mehrschichtfolie ausgebildet ist, wobei eine Schicht der Mehrschichtfolie gezielt mit guten Verschweißeigenschaften ausgestattet wird. Darüber hinaus wird vorgeschlagen, dass die die Vorderlage bildende Kunststofffolie auf der dem Fahrzeugsitz zugekehrten Innenseite rutschsichernd und auf der Außenseite glatt ausgebildet sein kann.

DE 297 05 666 U1 schlägt einen Fahrzeugsitz-Schutzbezug aus einem Faservliesstoff vor, welcher einen angenehmen textilen Oberflächencharakter besitzen soll, keine "Abfaserungen" ausbilden soll, eine gute Passform an die jeweilige Gestaltung des Fahrzeugsitzes aufweisen soll und nach Gebrauch möglichst für den gleichen Verwendungszweck recycelt werden kann. Hierzu ist der Fahrzeugsitz-Schutzbezug gemäß DE 297 05 666 U1 aus einem Faservliesstoff hergestellt, dessen Flächengewicht kleiner ist als 100 g/m². Der Faservliesstoff wird hierzu in der Form des Fahrzeugsitz-Schutzbezuges zugeschnitten. Der derart gebildete, grundsätzlich einteilige Fahrzeugsitz-Schutzbezug bedeckt dann ganzflächig die Sitzfläche, die Sitzkanten und die Rückenlehne. Zur Gewährleistung der Passbeständigkeit und allseitigen Haftung des Fahrzeugsitz-Schutzbezuges wirken neben der zugeschnittenen Form des Fahrzeugsitz-Schutzbezuges zwei Halteelemente. Hierbei handelt es sich einerseits um ein am Sitzumschlag angenähtes Gummiband oder auf den gerafften Faservliesstoff aufgenähtes Textilband oder ein angenähtes Bindeband mit einseitiger Schlaufe sowie andererseits um eine weitere mechanische Verbindung zwischen einer am Sitzhinterteil des Fahrzeugsitz-Schutzbezuges angenähten Haltelasche und dem Lehnenhinterteil des Fahrzeugsitz-Schutzbezuges. Nach Gebrauch des Fahrzeugsitz-Schutzbezuges soll dieser grob zerkleinert werden. In einer Reißmaschine werden dann Reißfasern hergestellt, die wieder in ein Faservlies eingemischt werden können.

Weiterer Stand der Technik, welcher dauerhaft einsetzbare, verhältnismäßig massive und individuell vorgeformte sowie waschbare Schutzbezüge für Fahrzeugsitze oder Kindersitze betrifft, ist aus den Druckschriften WO 2008/002684 A2**,** US7 537 284 B1**,** US 2005/130537 A1 und US 5 806 925 A bekannt.

Die Patentschrift EP 2 913 224 B1 schlägt einen Fahrzeugsitz-Schutzbezug vor, bei dem eine Rücklage (zumindest teilweise) aus einer Kunststofffolie besteht, während eine Vorderlage (zumindest teilweise) aus einem Vlies besteht. Hierbei ist die Rücklage elastisch ausgebildet. Diese Ausgestaltung basiert auf dem Ansatz, die Vorderlage einerseits und die Rücklage andererseits gezielt an die jeweiligen Anforderungen anzupassen: Die mit dem Vlies gebildete Vorderlage stellt eine angenehme Kontaktfläche für den Nutzer bereit, welche im Bereich des Vlieses atmungsaktiv ist, was einerseits für die Ableitung von Schweiß und andererseits für die Ableitung von aus dem Fahrzeugsitz ausdampfender Restfeuchtigkeit von Vorteil ist. Genutzt werden kann auch ein deutlich verbessertes Schallemissionsverhalten des Vlieses bei Bewegungen des Benutzers auf dem Fahrzeugsitz. Andererseits kann auch bei einer nicht durchsichtigen Vorderlage aus einem Vlies die Rücklage aus Kunststoff durchsichtig bleiben, so dass der Fahrzeugsitz durch den Fahrzeugsitz-Schutzbezug sichtbar bleibt. Schließlich kann auch die Elastizität der Rücklage genutzt werden, um einen strammen Sitz des Fahrzeugsitz-Schutzbezuges, eine gute Montierbarkeit und Demontierbarkeit des Fahrzeugsitz-Schutzbezuges und u. U. auch eine mehrfache Verwendbarkeit des Fahrzeugsitz-Schutzbezuges zu gewährleisten. In dem Vlies können Fasern aus Polyethylen, PET, Polyamid und/oder Polypropylen Einsatz finden. Die Kunststofffolie im Bereich der Rückenlage kann ein- oder mehrschichtig ausgebildet sein mit Herstellung der Kunststofffolie mit einem Laminieren, Kaschieren oder Koextrudieren. EP 2 913 224 B1 schlägt vor, die Vorderlage aus dem Vlies und die Rücklage aus der Kunststofffolie nicht miteinander zu vernähen, sondern vielmehr miteinander zu verschweißen. Hierzu kann das Vlies konkave Aufwölbungen aufweisen, im Bereich welcher das Vlies verdichtet ist. In verdickten Bereichen abseits dieser konkaven Aufwölbungen kann das Verschweißen des Vlieses mit der Kunststofffolie erfolgen. Zum Verschweißen kann ein Thermotransfer-Verfahren, ein Heizdraht oder anderes Heizelement, ggf. mit einem Anpressen der erwärmten, zu verschweißenden Oberflächen unter Druck, verwendet werden.

In der nicht vorveröffentlichten europäischen Patentanmeldung mit dem amtlichen Aktenzeichen EP 16 155 462.1 wird als Stand der Technik gemäß den Internet-Adressen
- http://www.slipngrip.com/SlipNGrip_Seat_Covers/FG-P9943-SC.html
- http://www.gammaplast.com/public/download/scheda_1_coprisedili_001.pdf
beschrieben, der als eine Art Überwurf benutzte und vereinfacht als mantelartig zu bezeichnende Fahrzeugsitz-Schutzfolien betrifft. Diese Fahrzeugsitz-Schutzfolien sind mit einem oberen Schlauchteil gebildet, der in Umfangsrichtung geschlossen ausgebildet ist und im Bereich des oberen Randes nach oben geschlossen ist, womit das obere Schlauchteil eine im Querschnitt randgeschlossene obere Tasche bildet. Unmittelbar an dieses obere Schlauchteil schließt ein unteres Schlauchteil an, welches auf der Rückseite einen in Längsrichtung durchgehenden Schlitz aufweist und sowohl im Übergangsbereich zu dem oberen Schlauchteil nach oben als auch im Bereich eines unteren Randes nach unten nicht geschlossen ist. Unter Öffnung des Schlitzes des unteren Schlauchteils kann der Fahrzeugsitz-Schutzbezug über einen Fahrzeugsitz geworfen werden, wobei die von dem oberen Schlauchteil gebildete obere, randgeschlossene Tasche auf eine Kopfstütze und den oberen Endbereich der Rückenlehne aufgezogen werden kann. Die obere Tasche muss hier einer Querschnitt aufweisen, welcher zumindest genauso groß ist wie der Querschnitt der Rückenlehne im oberen Endbereich derselben. Das geöffnete untere Schlauchteil deckt sowohl den unteren Bereich der Rückenlehne als auch die Sitzfläche ab, wobei das untere Schlauchteil seitlich über das Sitzpolster überhängen kann. Um ein Einreißen des Fahrzeugsitz-Schutzbezuges im Übergangsbereich von dem Schlitz des unteren Schlauchteils zu dem oberen Schlauchteil zu vermeiden, kann der Endbereich des Schlitzes des unteren Schlauchteils im Übergangsbereich zu dem oberen Schlauchteil mit einer aufgeklebten Verstärkungsfolie verstärkt sein.

Die Patentanmeldung EP 16 155 462.1 schlägt vor diesem Hintergrund eine Fahrzeugsitz-Schutzfolie vor, die aus einer Kunststofffolie mit einer Dicke von weniger als 80 µm hergestellt ist. Ein oberes, in Umfangsrichtung nicht geschlossenes und somit randoffenes Schlauchteil wird allenfalls für das Überziehen über eine Kopfstütze des Fahrzeugsitzes verwendet, während das untere, mit einem Schlitz ausgestattete Schlauchteil sich über die gesamte, von dem Sitzpolster und der Rückenlehne ausgebildete Sitzfläche erstreckt und hier geschlitzt ausgebildet ist. Vorzugsweise ist überhaupt kein oberes Schlauchteil vorhanden, so dass der Schlitz der Fahrzeugsitz-Schutzfolie bis zum geschlossenen oberen Rand der Fahrzeugsitz-Schutzfolie, insbesondere einer Verschweißung im Bereich des oberen Rands, durchgeht. Damit ist auch die gesamte obere Tasche im Querschnitt randoffen ausgebildet. Hierbei können durch den Schlitz voneinander getrennte Rücklagenteile überlappend zueinander angeordnet sein, womit dann im Bereich einer Schweißnaht zwecks Bereitstellung des oberen Randes drei Lagen miteinander verschweißt sein können. Die Fahrzeugsitz-Schutzfolie kann aus einer einstückigen Kunststofffolie bestehen, die auch als Mehrschichtfolie ausgebildet sein kann. Möglich ist, dass die laterale Erstreckung einer Vorderlage kleiner ist als die laterale Erstreckung einer Rückenlehne eines Fahrzeugsitzes oder sogar ungefähr dem halben Umfang der Kopfstütze in dem oberen Endbereich der Kopfstütze entspricht oder kleiner ist als dieser. Dieser Ausgestaltung liegt die Erkenntnis zugrunde, dass infolge des Schlitzes der Rückenlage der Querschnitt der Fahrzeugsitz-Schutzfolie so weit geöffnet werden kann, dass diese (mit hinreichendem Abstand von dem oberen Rand konisch in Richtung des oberen Randes zulaufend) über eine Rückenlehne mit größerem Querschnitt gestülpt werden kann. Eine derartige Fahrzeugsitz-Schutzfolie kann somit auch für unterschiedliche Fahrzeugsitztypen mit unterschiedlichen Abmessungen verwendet werden.

Weiterer Stand der Technik ist bekannt aus DE 690 22 404 T2 und JP H08 38313 A**.**

### AUFGABE DER ERFINDUNG

Der Erfindung liegt die Aufgabe zugrunde, einen Fahrzeugsitz-Schutzbezug vorzuschlagen, der insbesondere hinsichtlich
- der Abfuhr einer Restfeuchtigkeit des Fahrzeugsitzes,
- des Transportes von Schweiß der auf dem Fahrzeugsitz sitzenden Person,
- einer möglichst einfachen Fertigung,
- einer möglichst rutschfesten Anordnung auf dem Fahrzeugsitz,
- einer etwaigen Wiederverwertbarkeit für mehrere Fahrzeugsitze,
- des Einsatzes für Fahrzeugsitze unterschiedlicher Typen und Abmessungen,
- der akustischen Eigenschaften,
- einer umweltverträglichen, sortenreinen Entsorgung,
- der elektrostatischen Eigenschaften,
- einer Handhabung eines mit dem Fahrzeugsitz-Schutzbezug geschützten Fahrzeugsitzes durch einen Roboter und/oder
- einer kostengünstigen Herstellung
verbessert ist. Des Weiteren liegt der Erfindung die Aufgabe zugrunde, ein Verfahren zur Herstellung eines derart verbesserten Fahrzeugsitz-Schutzbezuges vorzuschlagen. Schließlich liegt der Erfindung auch die Aufgabe zugrunde, ein Verfahren zur Verwendung eines derartigen Fahrzeugsitz-Schutzbezuges vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt einen Fahrzeugsitz-Schutzbezug vor, der eine Vorderlage sowie eine Rücklage aufweist. Ist der Fahrzeugsitz-Schutzbezug über einen Fahrzeugsitz gestülpt, ist die Vorderlage auf der Vorderseite des Fahrzeugsitzes angeordnet, während die Rücklage auf der Rückseite des Fahrzeugsitzes angeordnet ist. Eine obere Tasche des Fahrzeugsitz-Schutzbezuges, welche für das Überstülpen über die Rückenlehne des Fahrzeugsitzes bestimmt ist, ist hierbei von der Vorderlage und der Rücklage begrenzt. Die obere Tasche weist einen oberen Rand auf, der zumindest teilweise geschlossen ist und vorzugsweise über die gesamte Quererstreckung geschlossen ist. Erfindungsgemäß sind die Vorderlage und die Rücklage zusammen aus einer einstückigen, gefalteten Materialbahn hergestellt. Somit kann der Fahrzeugsitz-Schutzbezug beispielsweise grundsätzlich entsprechend dem Fahrzeugsitz-Schutzbezug ausgebildet sein, wie dieser in der nicht vorveröffentlichten europäischen Patentanmeldung EP 16 155 462.1 der Anmelderin beschrieben ist. Abweichend zu dieser Ausführungsform ist aber erfindungsgemäß der Fahrzeugsitz-Schutzbezug auch mit einer unteren Tasche ausgestattet. Die untere Tasche ist ebenfalls von der Vorderlage und der Rücklage begrenzt. Hierbei verfügt die untere Tasche über einen unteren Rand, der teilweise, vorzugsweise aber über die gesamte Quererstreckung, geschlossen ist.

Durch den erfindungsgemäß ermöglichten Einsatz einer einstückigen, gefalteten Materialbahn können die Herstellungskosten und der Herstellungsaufwand deutlich reduziert werden, da u. U. das Zuführen und das Verbinden mehrerer Materialbahnen entbehrlich ist. U. U. können auch die Möglichkeiten für die einzusetzenden Materialen bei Einsatz einer einstückigen, gefalteten Materialbahn erweitert werden.

Ein weiteres Problem bei der Herstellung des Fahrzeugsitz-Schutzbezuges stellen die Verbindungen zwischen Vorderlage und Rücklage dar, da die Herstellung der Verbindungen mit einem erhöhten Aufwand verbunden sind und die hergestellten Verbindungen auch hinsichtlich der (Dauer-)Festigkeit des Fahrzeugsitz-Schutzbezuges problematisch sein können. Zumindest ein Teil der erforderlichen Verbindungen zwischen Vorderlage und Rücklage kann durch die Faltungen der Materialbahn bereitgestellt werden, da die Materialbahn von der Vorderlage über die Faltung in die Rücklage übergehen kann, so dass im Bereich der Faltungen zusätzliche, gesondert herzustellende Verbindungen (beispielsweise in Form einer Naht, einer Verschweißung oder einer Verklebung) nicht erforderlich sind.

Erfindungsgemäß weist die Rücklage des Fahrzeugsitz-Schutzbezuges eine Ausnehmung auf, die von dem zumindest teilweise geschlossenen unteren Rand bis zum zumindest teilweise geschlossenen oberen Rand in Längsrichtung durchgehend (also ohne Unterbrechungen ausgebildet ist. Mittels dieser Ausnehmung ist das rückseitige Öffnen des Fahrzeugsitz-Schutzbezuges möglich, so dass dieser über den Fahrzeugsitz gestülpt werden kann. Hierbei ermöglicht die Ausnehmung der Rücklage, dass (grundsätzlich entsprechend der europäischen Patentanmeldung EP 16 155 462.1, dort aber lediglich für die obere Tasche) eine obere Tasche und/oder eine untere Tasche geschaffen werden können, deren randseitiger Querschnitt vorgegeben ist durch die Breite des zumindest teilweise geschlossenen Randes, während sich die Tasche von dem Rand weg erweitern kann, womit Fahrzeugsitze mit unterschiedlichen Querschnitten der Rückenlehne und/oder des Sitzpolsters unterschiedlich weit in die obere Tasche bzw. untere Tasche eintreten können und somit eine Anpassbarkeit des Fahrzeugsitz-Schutzbezuges an Fahrzeugsitze unterschiedlicher Typen und Geometrien gewährleistet ist. U. U. stellt eine sich derart in Richtung des Randes "verjüngende" Tasche auch eine Art "Einführ- oder Überstülphilfe" dar, welche zunächst das Einführen des Fahrzeugsitzes in einem großen Querschnittsbereich der Tasche und dann mit weiterem Aufziehen der Tasche ein zunehmend engeres Anlegen der Tasche an den Fahrzeugsitz ermöglicht.

Vorzugsweise ist die in Längsrichtung durchgehende Ausnehmung der Rücklage
- von einem Spalt zwischen einer Überlappung der seitlichen Bereiche im Bereich der unteren Tasche,
- einem Abstand der seitlichen Bereiche im Bereich der unteren Tasche,
- einer Unterbrechung der Rücklage und/oder
- von einem Spalt zwischen einer Überlappung der seitlichen Bereiche im Bereich der oberen Tasche
gebildet.

In weiterer Ausgestaltung der Erfindung bildet ein mittiger Bereich der Materialbahn die Vorderlage. Seitliche Bereiche der Materialbahn sind so gefaltet, dass diese (ausgehend von unterschiedlichen seitlichen Rändern der Vorderlage) gemeinsam die hier zumindest zweistückige Rücklage bilden. Zur Bildung des zumindest teilweise geschlossenen oberen Rands der oberen Tasche sind obere Ränder der seitlichen Bereiche der Materialbahn über eine Verbindung mit dem oberen Rand des mittigen Bereichs der Materialbahn verbunden. Entsprechend sind zur Bildung des zumindest teilweise geschlossenen unteren Rands der unteren Tasche untere Ränder der seitlichen Bereiche der Materialbahn über eine Verbindung mit dem unteren Rand des mittigen Bereichs der Materialbahn verbunden. Die Ausnehmung der Rücklage kann dann zumindest teilweise von seitlichen Rändern der Materialbahn begrenzt sein.

Grundsätzlich können im Rahmen der Erfindung beliebige Verbindungstechnologien für die Gewährleistung der Schließung des oberen Randes und/oder des unteren Randes eingesetzt werden. Um lediglich einige nicht beschränkende Beispiele zu nennen, kann eine Verbindung der unteren oder oberen Ränder der seitlichen Bereiche der Materialbahn mit dem unteren oder oberen Rand des mittigen Bereichs der Materialbahn über
- eine Naht mit einem geeigneten Nahtfaden, beispielsweise aus Polypropylen,
- ein unmittelbares Verkleben durch einen Klebstoff zwischen den seitlichen Bereichen und dem mittigen Bereich,
- ein Verkleben mittels eines zwischen dem seitlichen Bereich und dem mittigen Bereich angeordneten beidseitig klebenden Klebestreifens oder
- einen die seitlichen Bereiche und den mittigen Bereich umfassenden einseitig klebenden Klebestreifen u. ä.
erfolgen.

Für eine bevorzugte Ausgestaltung der Erfindung erfolgt eine derartige Verbindung über eine gepunktete oder durchgehende Schweißnaht, welche sich über einen Teil oder den gesamten Rand erstrecken kann. Hierbei kann die Schweißnaht mit dem Schmelzen eines zusätzlichen, von der Materialbahn unabhängigen Materials (welches dem Material der Materialbahn entsprechen kann oder abweichend hiervon ausgebildet sein kann) erfolgen. Vorzugsweise erfolgt aber ein unmittelbares Verschweißen der seitlichen Bereiche und des mittigen Bereichs der Materialbahn miteinander ohne ein zusätzliches Material.

Von der Erfindung umfasst sind Ausführungsformen, bei welchen mehrere Fahrzeugsitz-Schutzbezüge in einem kontinuierlichen oder diskontinuierlichen oder intermittierenden Herstellungsprozess im Bereich der oberen und unteren Ränder aneinanderhängend gefertigt werden. Hierbei ist möglich, dass die Schweißnaht an dem oberen Rand der oberen Tasche eines Fahrzeugsitz-Schutzbezuges mit einem gewissen Abstand von der benachbarten Schweißnaht eines unteren Randes eines benachbarten Fahrzeugsitz-Schutzbezuges hergestellt wird und dann ein Trennen der benachbarten Fahrzeugsitz-Schutzbezüge in dem Zwischenraum zwischen den beiden Schweißnähten der benachbarten Fahrzeugsitz-Schutzbezügen erfolgt. Dies erfordert aber, dass mit einem definierten Abstand zwei separate Schweißnähte erstellt werden müssen.

Gemäß einem erfindungsgemäßen Vorschlag werden die Schweißnaht an dem oberen Rand der oberen Tasche eines Fahrzeugsitz-Schutzbezuges und die Schweißnaht des unteren Randes der unteren Tasche des benachbarten Fahrzeugsitz-Schutzbezuges von einem gemeinsamen, eine gewisse Längserstreckung aufweisenden Schweißbereich bereitgestellt, welcher sich in aneinander angrenzenden Randbereichen der beiden benachbarten Fahrzeugsitz-Schutzbezüge erstreckt. Wird dann dieser Schweißbereich in Querrichtung so durchtrennt, dass die beiden Schweißnähte der benachbarten Ränder der beiden Fahrzeugsitz-Schutzbezüge verbleiben, können die beiden Schweißnähte und die zumindest teilweise Schließung der jeweiligen Ränder mit der Herstellung eines einzigen Schweißbereichs gewährleistet werden, was eine signifikante Vereinfachung des Herstellungsprozesses darstellt. Für diese Ausgestaltung ergibt sich somit an einem Fahrzeugsitz-Schutzbezug eine Schweißnaht, die unmittelbar an den oberen Rand der oberen Tasche angrenzt, sowie eine Schweißnaht, die unmittelbar an den unteren Rand der unteren Tasche angrenzt. Das Entsprechende gilt für andere Verbindungstechnologien. So kann beispielsweise ein Verbindungsbereich erstellt werden, der nach Durchtrennung in Querrichtung die Verbindungen der beiden Ränder bereitstellt.

Durchaus möglich ist, dass die Ränder der seitlichen Bereiche der Materialbahn einen geradlinigen Verlauf aufweisen, womit die Materialbahn vor dem Falten und der Herstellung der Verbindungen des oberen und unteren Rands rechteckig ausgebildet sein kann. Für eine bevorzugte Ausgestaltung der Erfindung weisen die seitlichen Ränder der seitlichen Bereiche der Materialbahn in einem Teilabschnitt einen nicht geradlinigen, insbesondere konkaven Verlauf auf. Durch die Gestaltung des Verlaufes der seitlichen Ränder kann gezielt der Geometrie des Fahrzeugsitzes und unterschiedlichen funktionalen Bereichen des Fahrzeugsitz-Schutzbezuges Rechnung getragen werden. Hierbei ist möglich, dass die Materialbahn bereits als Halbzeug mit dem Verlauf der seitlichen Ränder bereitgestellt wird. Vorzugsweise erfolgt die Bereitstellung des Halbzeugs aber mit einem rechteckigen Teilabschnitt, während dann die Materialbahn mit dem nicht geradlinigen Verlauf der seitlichen Ränder durch einen weiteren Bearbeitungsprozess erzeugt wird, insbesondere mittels eines Ausschnitts oder einem Ausstanzen.

Grundsätzlich sind beliebige konkave Verläufe der seitlichen Ränder der Materialbahn möglich. Für einen erfindungsgemäßen Fahrzeugsitz-Schutzbezug weist der Verlauf der seitlichen Ränder der Materialbahn einen Aussparungsverlauf auf. In dem Aussparungsverlauf ist die Breite der Materialbahn kleiner als der laterale Abstand der Faltungen der Materialbahn. Dies hat zur Folge, dass die Vorderlage zwischen den Aussparungsverläufen eine reduzierte Quererstreckung besitzt, womit diese in diesem Bereich u. U. nicht die volle Breite des Fahrzeugsitzes abdeckt. Sind die Aussparungsverlauf in dem Bereich des Fahrzeugsitz-Schutzbezuges angeordnet, welcher in einen Spalt zwischen der Rückenlehne und dem Sitzpolster des Fahrzeugsitzes eingesteckt werden soll, ist die verringerte laterale Erstreckung der Vorderlage zwischen den Aussparungsverläufen vorteilhaft, um das Einstecken die Vorderlage zwischen seitliche Begrenzungen des Spaltes zwischen der Rückenlehne und dem Sitzpolster, beispielsweise Begrenzungen durch seitliche Scharniere zum Kippen der Rückenlehne, zu ermöglichen. Für diese erfindungsgemäße Ausgestaltung kann der Aussparungsverlauf einen oberen Seitenstreifen eines seitlichen Bereichs der Materialbahn von einem unteren Seitenstreifen des seitlichen Bereichs der Materialbahn trennen.

Im Rahmen der Erfindung können die genannten Seitenstreifen eine beliebige Längs- und Quererstreckung aufweisen. Für eine bevorzugte Ausgestaltung der Erfindung besitzt der obere Seitenstreifen (bis auf etwaige endseitige geradlinige oder kurvenförmige Übergangsverläufe) eine konstante laterale Erstreckung. Möglich ist hierbei, dass diese laterale Erstreckung der Tiefe der Rückenlehne entspricht, womit der obere Seitenstreifen seitlich die Rückenlehne abdecken kann. Möglich ist aber auch, dass der obere Seitenstreifen eine größere laterale Erstreckung aufweist, so dass sich der obere Seitenstreifen auch zumindest teilweise über die Rückseite der Rückenlehne erstrecken kann.

Alternativ oder kumulativ können die unteren Seitenstreifen unterschiedliche Seitenstreifenabschnitte aufweisen: Hierbei kann ein erster unterer Seitenstreifenabschnitt vorhanden sein, der sich von dem unteren Rand der unteren Tasche nach oben erstreckt. Des Weiteren kann ein zweiter unterer Seitenstreifenabschnitt vorhanden sein, der sich nach oben an den ersten unteren Seitenstreifenabschnitt anschließt. Der zweite untere Seitenstreifenabschnitt weist dabei eine kleinere laterale Erstreckung auf als der erste untere Seitenstreifenabschnitt. Hierbei kann der erste untere Seitenstreifenabschnitt dazu bestimmt sein, die Vorderseite des Sitzpolsters abzudecken, wozu der erste untere Seitenstreifenabschnitt eine Erstreckung in Längsrichtung aufweisen kann, die der Höhe des Sitzpolsters entspricht oder größer ist als diese. Hingegen kann der zweite untere Seitenstreifenabschnitt bestimmt sein, um die Seitenflächen des Sitzpolsters abzudecken, wozu der zweite untere Seitenstreifenabschnitt eine laterale Erstreckung aufweisen kann, die der Höhe des Sitzpolsters entspricht oder größer ist als diese.

Vorzugsweise besitzen die von den gegenüberliegenden seitlichen Rändern ausgehenden seitlichen Bereiche der Materialbahn mindestens eine Überlappung. Um lediglich einige nicht beschränkende Beispiele zu nennen, können die seitlichen Bereiche der Materialbahnen im Bereich der unteren Seitenstreifenabschnitte überlappen, womit die Vorderseite des Sitzpolsters infolge der Überlappung durch den Fahrzeugsitz-Schutzbezug vollständig abgedeckt sein kann. Hingegen können nicht überlappende Teilbereiche der seitlichen Bereiche der Materialbahn genutzt werden, um die Taschen zu öffnen und in diesen Bereichen das anfängliche Überstülpen über den Fahrzeugsitz zu ermöglichen. Andererseits kann über die Überlappungen die Anpassbarkeit des Fahrzeugsitz-Schutzbezuges an Fahrzeugsitze unterschiedlicher Typen und Geometrien gewährleistet werden, da mit dem Öffnen der Taschen durch die Anpassung der des Ausmaßes der Überlappung in lateraler Richtung der Öffnungsquerschnitt der Taschen verändert werden kann, aber gleichzeitig bei verbleibender Restüberlappung gewährleistet werden kann, dass die Vorderseite des Sitzpolsters des Fahrzeugsitzes vollständig abgedeckt ist. Das Entsprechende gilt für eine etwaige Überlappung im Bereich der oberen Tasche.

Erstreckt sich die Überlappung auch im Bereich des oberen und/oder unteren Randes, kann die Überlappung auch für die bessere Verbindung der Vorderlage mit der Rücklage genutzt werden. Findet z. B. eine Materialbahn Einsatz, deren Verschweißung eine gewisse Dicke der Materialbahn erfordert, führt die Überlappung der seitlichen Bereiche der Materialbahn dazu, dass mit der Vorderlage beide seitlichen Bereiche der Materialbahn zu verschweißen sind, so dass hier die dreifache Dicke der Materialbahn für die Verschweißung genutzt werden kann, womit eine Verschweißung erst ermöglicht wird oder durch die Verfügbarkeit von mehr Material verbessert sein kann.

Grundsätzlich kann in dem Fahrzeugsitz-Schutzbezug die Materialbahn eine beliebige Geometrie mit beliebigen Ausnehmungen, Ansätzen, Rändern, Zusatz-Materialbahnen, Beschichtungen, weiteren aufgebrachten Schichten (beispielsweise mittels Laminieren, Kaschieren, Koextrudieren, Aufkleben) u. ä. aufweisen. Für einen besonderen erfindungsgemäßen Vorschlag weist die Materialbahn eine Ausnehmung auf, welche ein Sichtfenster des Fahrzeugsitz-Schutzbezuges bildet. Dieser Ausgestaltung liegt zugrunde, dass bei einer grundsätzlich nicht durchsichtigen Ausbildung des Fahrzeugsitz-Schutzbezuges der mit dem Fahrzeugsitz-Schutzbezug geschützte Fahrzeugsitz durch den Fahrzeugsitz-Schutzbezug nicht mehr zu sehen ist. Werden aber unterschiedliche Fahrzeugsitze bevorratet oder mit einem Fahrzeug montiert, ist die Kenntnis des jeweiligen Typs des durch den Fahrzeugsitz-Schutzbezug geschützten Fahrzeugsitzes oder dessen Farbe von Interesse. Durch das Sichtfenster kann der Fahrzeugsitz durch den Fahrzeugsitz-Schutzbezug weiterhin sichtbar bleiben. Möglich ist hierbei, dass das Sichtfenster eine Öffnung darstellt. Soll eine Verschmutzung oder Beschädigung des Fahrzeugsitzes durch das Sichtfenster vermieden sein, kann die das Sichtfenster bildende Ausnehmung mittels eines Zusatzmaterials, beispielsweise einer aufgeklebten transparenten Kunststofffolie, geschlossen sein.

Ebenfalls möglich ist, dass eine Ausnehmung der Materialbahn eine Öse darstellt, mittels welcher beispielsweise ein Band, ein Faden, ein Haken u. ä. verbunden werden, welches oder welcher der Befestigung und/oder dem Spannen des Fahrzeugsitz-Schutzbezuges an dem Fahrzeugsitz dient.

Möglich ist, dass der Fahrzeugsitz-Schutzbezug auch geeignete Ausnehmungen aufweisen kann, durch welche sich Tragelemente für eine Kopfstütze oder auch eine Gurtschnalle bzw. ein Gurt erstrecken können. Derartige Ausnehmungen können bereits ausgeschnitten oder ausgestanzt sein oder perforiert sein, so dass diese erst bei Verwendung des Fahrzeugsitz-Schutzbezuges oder bei Bedarf erzeugt werden.

Für einen erfindungsgemäßen Fahrzeugsitz-Schutzbezug ist zumindest auf einen Teilbereich der Materialbahn eine Zusatzschicht aufgebracht. Diese Zusatzschicht kann folgenden, beispielhaft genannten alternativen oder kumulativen Zwecken dienen:
- Mittels einer derartigen Zusatzschicht kann ein transparentes Schließen einer Ausnehmung für ein Sichtfenster erfolgen.
- Mittels einer Zusatzschicht kann eine Verstärkung der Materialbahn in einem besonders stark beanspruchten Bereich erfolgen.
- Befindet sich die Zusatzschicht auf der dem Fahrzeugsitz zugewandten Seite des Fahrzeugsitz-Schutzbezuges, kann mittels der Zusatzschicht die Rutschfestigkeit des Fahrzeugsitz-Schutzbezuges gegenüber dem Fahrzeugsitz erhöht werden.
- Befindet sich die Zusatzschicht auf der dem Benutzer zugewandten Seite, kann die Zusatzschicht ein leichtes Gleiten des Benutzers bei Bewegungen auf dem Fahrzeugsitz-Schutzbezug gewährleisten und/oder einen angenehmen Kontakt, ggf. auch mit einer Aufnahme und/oder Ableitung von Schweiß, mit dem Benutzer gewährleisten.
- Möglich ist, dass im Bereich der Zusatzschicht eine Kennzeichnung des Fahrzeugsitz-Schutzbezuges erfolgt (beispielsweise mit einer Typenangabe, Hinweisen zur Benutzung des Fahrzeugsitz-Schutzbezuges, Hinweisen zu Typen von Fahrzeugsitzen, für welche der Fahrzeugsitz-Schutzbezug bestimmt ist, Hinweisen zu einer Entsorgung des Fahrzeugsitz-Schutzbezuges oder Hinweisen zu einem Hersteller des Fahrzeugsitz-Schutzbezuges).
- Möglich ist auch, dass mittels der Zusatzschicht eine Sicherung des Fahrzeugsitz-Schutzbezuges in der auf dem Fahrzeugsitz montierten Stellung gewährleistet wird, indem beispielsweise nach einem Spannen von Teilbereichen des Fahrzeugsitz-Schutzbezuges Teilbereiche an einem anderen Teilbereich des Fahrzeugsitz-Schutzbezuges über die Zusatzschicht fixiert werden können.
- Die Zusatzschicht kann dazu dienen, die in Längsrichtung durchgehende Ausnehmung zwischen dem oberen Rand und dem unteren Rand zu unterbrechen oder zu verkürzen.
- Die Zusatzschicht kann dazu verwendet werden, den Fahrzeugsitz-Schutzbezug an unterschiedliche Typen von Fahrzeugsitzen anzupassen. Beispielsweise kann über die Zusatzschicht eine geraffte Geometrie des Fahrzeugsitz-Schutzbezuges fixiert oder gesichert werden.

Möglich ist, dass die Zusatzschicht aus einem Material besteht, welches ohnehin atmungsaktiv ist. Möglich ist aber auch, dass die Zusatzschicht mit Ausnehmungen beliebiger Form, Größe und Verteilung ausgestattet ist, durch welche eine Atmungsaktivität gewährleistet werden kann. Handelt es sich bei der Zusatzschicht um eine Kunststofffolie oder auch ein Non-Woven-Material oder ein Vlies, kann auch die gezielte Erzeugung von Ausnehmungen für eine Atmungsaktivität durch ein Nadeln der Zusatzschicht erfolgen.

Die Zusatzschicht kann bereits auf dem Halbzeug oder der Materialbahn vor der Faltung der Materialbahn appliziert worden sein. Möglich ist aber auch, dass die Zusatzschicht erst nach dem Falten der Materialbahn und/oder dem Herstellen der Verbindungen im Bereich der Ränder aufgebracht wird.

Die Verbindung der Zusatzschicht mit der Materialbahn kann auf beliebige Weise, insbesondere mittels einer Beschichtung oder mit dem Aufkleben der Zusatzschicht, einem Laminieren, Kaschieren oder (Ko-)Extrudieren erfolgen. Vorzugsweise handelt es sich bei der Zusatzschicht um eine Kunststofffolie, welche eine oder mehrere Schichten aufweisen kann und/oder ein- oder beidseitig klebend sein kann.

Für den Fall, dass auf einen Teilbereich der Materialbahn eine Zusatzschicht aufgebracht ist, ist es vorteilhaft, wenn dieses nicht im Bereich der Vorderlage erfolgt, da dann die Atmungsaktivität des Fahrzeugsitz-Schutzbezuges durch die Zusatzschicht nicht im Kontaktbereich mit dem Benutzer reduziert wird. Beispielsweise kann die Zusatzschicht in dem Bereich der seitlichen Bereiche der Materialbahn aufgebracht sein, welcher mit eine Seitenfläche des Sitzpolsters oder der Rückenlehne in Wechselwirkung tritt, mit der Vorder- oder Unterseite des Sitzpolsters in Wechselwirkung tritt oder mit der Oberseite der Rückenlehne oder der Rückseite der Rückenlehne in Wechselwirkung tritt.

Möglich ist, dass die Zusatzschicht über zwei Anpresswalzen im laufenden Förderprozess auf die Materialbahn aufgebracht wird, wobei vorzugsweise eine Ausrichtung einer Längsachse einer Zusatzschicht entsprechend der Förderrichtung der Materialbahn erfolgt. Vorzugsweise ist eine Zusatzschicht auch im Bereich der Verbindungen des oberen und/oder unteren Randes angeordnet, so dass die Verbindung (insbesondere Schweißnaht) auch zur Fixierung der Zusatzschicht an der Materialbahn genutzt werden kann.

Die Rücklage kann als zwischen dem oberen Rand und dem unteren Rand durchgehende Ausnehmung einen Schlitz aufweisen, so dass seitliche Ränder der Materialbahn im Bereich des Schlitzes unmittelbar aneinander angrenzen. Wie erwähnt können die seitlichen Bereiche der Materialbahn im Bereich der Rücklage aber auch zumindest eine Überlappung aufweisen. Insbesondere bei Nutzung der konkaven Verläufe der seitlichen Ränder der Materialbahn kann aber die Rücklage eine Ausnehmung aufweisen, bei der es sich um eine (vereinfacht gesagt) U-förmige Ausnehmung im Bereich des Sitzpolsters handeln. Durch die U-förmige Ausnehmung, deren laterale Erstreckung sich mit dem Aufspreizen der unteren Tasche auch verändern kann, erstreckt sich die Tragstruktur des Sitzpolsters gegenüber dem Boden der Fahrgastzelle. Möglich ist auch, dass sich eine Ausnehmung der Rücklage in einem Einsteckbereich der Vorderlage erstreckt und/oder im rückseitigen Bereich der Rücklage, in welchem für über den Fahrzeugsitz gestülpten Fahrzeugsitz-Schutzbezug der Übergang von der Rückenlehne zu dem Sitzpolster erfolgt.

Grundsätzlich kann in dem erfindungsgemäßen Fahrzeugsitz-Schutzbezug eine Materialbahn aus einem beliebigen Material Einsatz finden. Möglich ist beispielsweise, dass für die Materialbahn eine Kunststofffolie Einsatz findet, die insbesondere hinsichtlich ihrer Atmungsaktivität modifiziert ist. Dies kann beispielsweise durch Einbringung von Ausnehmungen, Ausstanzungen, Atmungslöchern infolge einer Nadelung erfolgen. Die Atmungsaktivität der Kunststofffolie kann auch durch Zusatz von Füllstoffen mit einem Verstrecken erhöht sein. Beispielsweise können dem Kunststoffmaterial Kreidepartikel zugesetzt sein, aus welchen sich dann Mikrolöcher herausbilden. Möglich ist aber auch die Verwendung eines beliebigen textilen Materials für die Materialbahn.

Gemäß einem besonderen Vorschlag der Erfindung findet für die Materialbahn ein Non-Woven-Material oder ein Vlies Einsatz. Ohne dass dies zwingend der Fall ist, ist vorzugsweise der Fahrzeugsitz-Schutzbezug ausschließlich aus dem Non-Woven-Material oder dem Vlies mit den genannten Verbindungen, insbesondere durch eine Schweißnaht, hergestellt. Somit können für den Fahrzeugsitz-Schutzbezug die vorteilhaften Eigenschaften eines Non-Woven-Materials oder eines Vlieses (insbesondere eine gute Atmungsaktivität, eine angenehme Wechselwirkung mit dem Benutzer und deutlich verringerte Schallemissionen bei Bewegungen) genutzt werden.

Möglich ist, dass ein Non-Woven-Material oder Vlies beliebiger bekannter Art Einsatz findet. Vorzugsweise ist das Vlies aus Fasern gebildet. Beispielsweise Einsatz finden können hierbei Fasern aus Polyethylen, PET, Polyamid und/oder Polypropylen. Hierbei können Fasern des Non-Woven-Materials oder Vlieses eingesetzt sein, die aus feinen Monofilamenten mit Durchmessern bis hin zu 1,4 µm hergestellt sind, die verreckt und dann geschnitten sind und dann in einer Ebene aufeinander geschichtet werden und anschließend mit einem Kalander mit Nägeln kalandriert werden mit Applikation von Wärme. Möglich ist auch, dass ein Material Einsatz findet, welches in einem Spun-Bond-Verfahren hergestellt worden ist, oder ein Material, welches in einem Water-Jet-Verfahren hergestellt ist.

Für die Materialbahn aus dem Non-Woven-Material oder Vlies kann eine Materialbahn mit einem beliebigen Flächengewicht und auch einer beliebigen Dicke und Dichte Einsatz finden. Bei einem erfindungsgemäßen Fahrzeugsitz-Schutzbezug hat die Materialbahn aus dem Non-Woven-Material oder Vlies ein Flächengewicht im Bereich von 12 gr/m² bis 60 gr/m² (insbesondere 20 gr/m² bis 55 gr/m² und vorzugsweise 35 gr/m² bis 45 gr/m²). Es hat sich gezeigt, dass für eine Materialbahn mit einem derartigen Flächengewicht einerseits ein verhältnismäßig leichter, im Vertriebszustand kleinvolumiger und angesichts des geringen Materialeinsatzes verhältnismäßig kostengünstiger Fahrzeugsitz-Schutzbezug bereitgestellt werden kann, welcher dennoch eine hinreichende Betriebsfestigkeit, einen hinreichenden Schutz des Fahrzeugsitzes und die Möglichkeit der Verbindung durch ein Schweißen gewährleistet bei gleichzeitiger Gewährleistung einer hinreichenden Atmungsaktivität.

Grundsätzlich kann eine Materialbahn mit einer beliebigen Luftdurchlässigkeit eingesetzt werden. Vorzugsweise besitzt die Materialbahn eine Luftdurchlässigkeit, welche zumindest 2.000 mm/s (insbesondere zumindest 2.000 mm/s für ein Flächengewicht des Vlieses von 40 gr/m² oder zumindest 2.500 mm/s für ein Flächengewicht des Vlieses von 30 gr/m²) gemäß der Norm DIN EN ISO 9237 in der am Anmeldetag geltenden Fassung beträgt.

Herkömmliche Fahrzeugsitz-Schutzbezüge können aus einem Schlauch hergestellt sein, womit die Bedingungen an die eingesetzten Herstellungsverfahren und/oder die verwendeten Halbzeuge beschränkt sind. Des Weiteren sind für bekannte Fahrzeugsitz-Schutzbezüge u. U. Verbindungen bzw. Schweißnähte in den oberen und seitlichen Randbereichen zwischen der Vorderlage und der Rücklage herzustellen, welche eine Gesamtlänge von mehr als 4 m aufweisen können. Erfindungsgemäß kann die Länge der herzustellenden Verbindungen einerseits dadurch reduziert werden, dass der Übergang von der Vorderlage zur Rücklage teilweise durch die Faltungen der Materialbahn gewährleistet wird. Andererseits führt die im Querschnitt randoffene Ausbildung der Taschen dazu, dass der Fahrzeugsitz-Schutzbezug grundsätzlich eine geringe laterale Erstreckung aufweisen kann, aber durch Öffnung der Taschen über die Randöffnungen dennoch der Fahrzeugsitz-Schutzbezug für Fahrzeugsitze mit verhältnismäßig großen Abmessungen genutzt werden kann. Dies hat zur Folge, dass auch die im Bereich des oberen Randes und des unteren Randes herzustellenden Verbindungen oder Schweißnähte eine verhältnismäßig kleine Länge besitzen können. Für einen besonderen Vorschlag der Erfindung ist die Gesamtlänge der herzustellenden Verbindungen des Fahrzeugsitz-Schutzbezuges, insbesondere der herzustellenden Schweißnähte, zwischen der Vorderlage und der Rücklage an einem Fahrzeugsitz-Schutzbezug insgesamt kleiner als 1.400 mm (insbesondere kleiner als 1.200 mm oder 1.100 mm).

Grundsätzlich können Materialbahnen beliebiger lateraler Erstreckung im Rahmen der Erfindung genutzt werden. Vorzugsweise findet eine Materialbahn Einsatz, deren maximale laterale Erstreckung nicht größer ist als 1.600 mm, womit der räumlicher Aufwand für die Bevorratung der Materialbahn und die Quererstreckung der Förderbahn für die Materialbahn reduziert werden kann und u. U. auch die Kosten für die Bereitstellung des Halbzeugs der Materialbahn reduziert werden können.

Um lediglich ein nicht beschränkendes Beispiel zu nennen, kann bei Nutzung eines Non-Woven-Materials oder eines Vlieses kommerziell ein Halbzeug erworben werden, welches auf Rollen mit Breiten von 3.200 mm und 1.600 mm angeboten wird. Für die erfindungsgemäße Nutzung einer Materialbahn mit einer maximalen lateralen Erstreckung nicht größer als 1.600 mm kann erfindungsgemäß erstmals ein Fahrzeugsitz-Schutzbezug aus einer Materialbahn eines Non-Woven-Materials oder Vlieses mit einer entsprechend kleineren Rolle mit verringerter lateraler Erstreckung hergestellt werden.

Als vorteilhaft hat sich erwiesen, wenn die Materialbahn antistatisch ausgebildet ist. Die antistatische Ausbildung der Materialbahn kann hierbei beispielsweise bedeuten, dass die Materialbahn einen Oberflächenwiderstand aufweist, welcher kleiner ist als 10¹⁰ Ohm, beispielsweise kleiner ist als 10⁸ Ohm oder sogar kleiner ist als 10³ Ohm oder 10¹ Ohm. Die Herbeiführung einer derartigen antistatischen Eigenschaft der Materialbahn kann auf vielfältige Weisen erfolgen.
- Beispielsweise kann eine Beimengung von Antistatika zu der Materialbahn, beispielsweise zu einem Polymer der Fasern des Vlieses, erfolgen.
- Ebenfalls möglich ist ein Tränkungsverfahren und/oder Imprägnierungsverfahren für ein hergestelltes Vlies oder ein Non-Woven-Material für die Verbesserung der antistatischen Eigenschaften.
- Möglich ist die Nutzung von leitfähigen Materialen wie Carbon-Fasern oder die Einbringung von Rußpartikeln.
- Möglich ist auch, dass metallisierte Kunststoffe zur Verbesserung der antistatischen Eigenschaften verwendet oder zugesetzt werden.

Möglich ist beispielsweise, dass eine Schweißnaht mittels Ultraschallschweißen erzeugt wird, bei welchem eine Einbringung von Wärme in die Materialbahn zum teilweisen Schmelzen derselben über Ultraschall erfolgt und dann eine Anpressung der miteinander zu verschweißenden Bereiche der Materialbahn erfolgt. Möglich ist auch, dass als Materialbahn oder als Zusatzschicht ein Vlies verwendet wird, welches unter der Kennzeichnung "TYVEK" (eingetragene Marke des Unternehmens DuPont de Nemours (Deutschland) GmbH) vertrieben wird.

Eine weitere Lösung der der Erfindung zugrundeliegenden Aufgabe stellt ein Verfahren zur Herstellung eines Fahrzeugsitz-Schutzbezuges der zuvor erläuterten Art dar. In diesem Verfahren wird zunächst ein bahnenförmiges Halbzeug bereitgestellt. Aus dem bahnenförmigen Halbzeug wird mittels eines Einschnittes oder einer Ausstanzung eine Materialbahn hergestellt, deren seitliche Ränder einen konkaven Verlauf aufweisen. Die seitlichen Bereiche des Materialbahn werden dann so gefaltet, dass diese die Rücklage bilden, während ein mittiger Bereich der Materialbahn die Vorderlage bildet. Obere Ränder der seitlichen Bereiche der Materialbahn werden mit dem oberen Rand des mittigen Bereichs der Materialbahn verbunden. Damit wird der zumindest teilweise geschlossene obere Rand der oberen Tasche hergestellt. Des Weiteren werden untere Ränder der seitlichen Bereiche der Materialbahn mit dem unteren Rand des mittigen Bereichs der Materialbahn verbunden. Hiermit wird der zumindest teilweise geschlossene untere Rand der unteren Tasche hergestellt. Vorzugsweise erfolgt das Verbinden hier durch Verschweißen. Die genannten oberen und unteren Ränder des Fahrzeugsitz-Schutzbezuges werden bei der Bereitstellung eines langgestreckten Halbzeuges, beispielsweise von einer Rolle, für mehrere hintereinanderliegend gefertigte Fahrzeugsitz-Schutzbezüge erst gebildet nach einem Durchtrennen der benachbarten Fahrzeugsitz-Schutzbezüge.

Bei dem zuvor erläuterten Verfahren können die Verbindungen im Bereich des oberen Rands und des unteren Rands, insbesondere die Schweißnähte, separat und gleichzeitig oder nacheinander hergestellt werden. Für einen besonderen Vorschlag der Erfindung wird bei dem Verfahren zur Herstellung des Fahrzeugsitz-Schutzbezuges zunächst ein Verbindungsbereich zwischen den seitlichen Bereichen der Materialbahn mit dem mittigen Bereich hergestellt, wobei der Verbindungsbereich eine gewisse Längserstreckung aufweist. Vorzugsweise ist der Verbindungsbereich ein Schweißbereich. Hieran anschließend wird dann der Verbindungsbereich durch eine Durchtrennung oder Perforation aufgeteilt in eine Verbindung oder Schweißnaht, die an dem ersten Fahrzeugsitz-Schutzbezug die unteren Ränder der seitlichen Bereiche der Materialbahn mit dem unteren Rand des mittigen Bereiches verbindet, und eine Verbindung oder Schweißnaht, die an einem zweiten benachbarten Fahrzeugsitz-Schutzbezug die oberen Ränder der seitlichen Bereiche der Materialbahn mit dem oberen Rand des mittigen Bereichs verbindet. Hierdurch kann der Herstellungsaufwand für die Herstellung der beiden Verbindungen bzw. Schweißnähte signifikant reduziert werden.

Eine weitere Lösung der der Erfindung zugrundeliegenden Aufgabe ist gegeben durch ein Verfahren zur Verwendung eines Fahrzeugsitz-Schutzbezuges der zuvor erläuterten Art. Für die Verwendung des Fahrzeugsitz-Schutzbezuges wird die obere Tasche des Fahrzeugsitz-Schutzbezuges über eine Rückenlehne des Fahrzeugsitzes gestreift, während die untere Tasche des Fahrzeugsitz-Schutzbezuges über ein Sitzpolster des Fahrzeugsitzes gestreift wird. Grundsätzlich ist die Reihenfolge dieses Überstreifens über die Rückenlehne und das Sitzpolster beliebig, während ein Überstreifen über das Sitzpolster nach dem Überstreifen über der Rückenlehne bevorzugt wird.

Für eine weitere Ausgestaltung der Erfindung wird bei der Verwendung des Fahrzeugsitz-Schutzbezuges ein Einsteckbereich des Fahrzeugsitz-Schutzbezuges in einen Spalt zwischen der Rückenlehne des Fahrzeugsitzes und ein Sitzpolster des Fahrzeugsitzes eingeführt.

Hierbei kann für eine weitere Ausführungsform des erfindungsgemäßen Verfahrens der Einsteckbereich des Fahrzeugsitz-Schutzbezuges in dem Spalt zwischen der Rückenlehne des Fahrzeugsitzes und einem Sitzpolster des Fahrzeugsitzes gesichert werden. Für die Art der Sicherung gibt es vielfältige Möglichkeiten, für welche in nicht beschränkender Weise die folgenden (alternativen oder kumulativen) Möglichkeiten genannt werden:
- Möglich ist, dass der Einsteckbereich des Fahrzeugsitz-Schutzbezuges in dem Kontaktbereich mit der Rückenlehne und dem Sitzpolster im Bereich des Spaltes mit einer ein Verrutschen hemmenden Zusatzschicht ausgestattet ist.
- Möglich ist, dass der Einsteckbereich in dem Spalt dadurch gesichert wird, dass ein Faden oder ein Band (elastisch oder nicht-elastisch) auf der dem Fahrzeugsitz abgewandten Seite des Einsteckbereichs in lateraler Richtung durch den Spalt geführt ist und unter Straffung oder Spannung auf der Rückseite des Fahrzeugsitzes verknotet oder anderweitig fixiert ist. Es kann auch ein Gummiband über den Fahrzeugsitz und den Fahrzeugsitz-Schutzbezug gestülpt werden, welches dann den Fahrzeugsitz-Schutzbezug mit dem Einsteckbereich in den Spalt zieht und darin sichert.
- Möglich ist, dass für den Fall, dass der Spalt zwischen der Rückenlehne des Fahrzeugsitzes und dem Sitzpolster des Fahrzeugsitzes bis zur Rückseite des Fahrzeugsitzes durchgehend ausgebildet ist, der Einsteckbereich des Fahrzeugsitz-Schutzbezuges bis auf die Rückseite des Fahrzeugsitzes hindurchgeführt ist, wo dieser dann mit der Rücklage des Fahrzeugsitz-Schutzbezuges verbunden sein kann (beispielsweise mit einer auf die Rücklage aufgeklebten beidseitig klebenden Zusatzschicht verklebt wird).
- Möglich ist auch insbesondere für einen nicht in Richtung der Rückseite des Fahrzeugsitzes durchgehenden Spalt, dass nach Einführen des Einsteckbereichs in den Spalt ein Sicherungsstab, insbesondere ein Kunststoffrohr, bei lateraler Ausrichtung der Längsachse des Sicherungsstabs so in den Spalt eingeführt wird, dass der Wiederaustritt des Sicherungsstabs infolge einer Verjüngung des Spalts zwischen der Rückenlehne und dem Sitzpolster behindert ist.
- Anstelle eines Sicherungsstabs kann auch ein aufgeblasener Kunststoffschlauch oder ein geschäumter Kunststoffschlauch, bspw. aus Polyethylen oder Polypropylen, verwendet werden, der dann für eine Entsorgung entleert werden kann, so dass dieser kein großes Volumen besitzt. Vorzugsweise besteht der Kunststoffschlauch aus demselben Material wie das Vlies oder das Non-Woven-Material, aus welchem die Materialbahn besteht, oder aus demselben Material wie die Zusatzschicht.

Grundsätzlich sind aber beliebige anderweitige Sicherungsmöglichkeiten, insbesondere eine Fixierung mittels Kabelbindern u. ä., möglich.

Soll eine gute Fixierung des Fahrzeugsitz-Schutzbezuges auf dem Fahrzeugsitz erfolgen, kann alternativ oder kumulativ
- eine Rutschhemmung durch geeignete Gestaltung der Kontaktflächen des Fahrzeugsitz-Schutzbezuges, insbesondere mit einer entsprechenden Zusatzschicht, und
- ein mechanisches Fixieren, beispielsweise durch die vorgenannten Sicherungsmaßnahmen des Einsteckbereichs und/oder weitere straffende oder sichernde mechanische Maßnahmen,
erfolgen.

Möglich ist durchaus auch, dass der Fahrzeugsitz-Schutzbezug auch eine Kopfstütze mit abdeckt. Des Weiteren möglich ist, dass mittels einer Zusatzschicht, beispielsweise mittels einer aufgeklebten Kunststofffolie, die an sich zwischen dem oberen Rand und dem unteren Rand durchgehende Ausnehmung teilweise im Bereich der oberen Tasche oder im Bereich der unteren Tasche geschlossen oder fixiert ist, so dass im Bereich dieser Zusatzschicht die Erstreckung der Tasche vorgegeben ist und nicht durch Öffnung des Ausnehmung verändert werden kann. Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt, solange der resultierende Gegenstand zum Schutzumfang gehört, der durch die Patentansprüche definiert ist. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den abhängigen Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Materialbahn für einen Fahrzeugsitz-Schutzbezug.
- **Fig. 2**: zeigt eine rückseitige Ansicht eines aus einer Materialbahn gemäß Fig. 1 hergestellten Fahrzeugsitz-Schutzbezuges.
- **Fig. 3**: zeigt einen Querschnitt III-III des Fahrzeugsitz-Schutzbezuges gemäß Figur 2.
- **Fig. 4**: zeigt einen Querschnitt IV-IV des Fahrzeugsitz-Schutzbezuges gemäß Figur 2.
- **Fig. 5**: zeigt einen Querschnitt V-V des Fahrzeugsitz-Schutzbezuges gemäß Figur 2.
- **Fig. 6**: zeigt eine weitere Ausgestaltung einer Materialbahn für einen Fahrzeugsitz-Schutzbezug.
- **Fig. 7**: zeigt eine weitere Ausgestaltung einer Materialbahn für einen Fahrzeugsitz-Schutzbezug.
- **Fig. 8**: zeigt einen Verfahrensschritt der Herstellung von Fahrzeugsitz-Schutzbezügen mit einem Halbzeug mit hintereinander angeordneten und noch miteinander verbundenen Materialbahnen.
- **Fig. 9**: zeigt einen anderen nachfolgenden Verfahrensschritt der Herstellung von Fahrzeugsitz-Schutzbezügen mit über Schweißbereiche miteinander verbundenen gefalteten Materialbahnen.

### FIGURENBESCHREIBUNG

In der folgenden Beschreibung bezeichnet eine Vorderseite eines Fahrzeugsitzes die Seite des Fahrzeugsitzes, welche der darauf sitzenden Person zugewandt ist. Hingegen bezeichnet die Rückseite des Fahrzeugsitzes die der auf dem Fahrzeugsitz sitzenden Person abgewandten Seite des Fahrzeugsitzes. "Oben" und "unten" bezeichnet ein die entsprechenden räumlichen Lagen in den Figuren, wobei "oben" (bzw. "unten") auch korreliert mit einer Lage in Richtung des oberen Endbereichs des Fahrzeugsitzes im Bereich der Rückenlehne oder Kopfstütze (bzw. einer Lage in Richtung des in Fahrtrichtung vorderen Endbereichs des Fahrzeugsitzes) bei auf den Fahrzeugsitz aufgestülptem Fahrzeugsitz-Schutzbezug. Eine Längsachse oder Längsrichtung bezeichnet in den Figuren eine Längs- und Symmetrieachse der Materialbahn und des Fahrzeugsitz-Schutzbezuges, die für auf den Fahrzeugsitz gestülpten Fahrzeugsitz-Schutzbezug korreliert mit der Längsachse des Sitzpolsters des Fahrzeugsitzes und der Hochachse oder Längsachse der Rückenlehne. Hingegen bezeichnet eine laterale Richtung oder eine Querrichtung in den Figuren eine horizontale Richtung, welche für auf den Fahrzeugsitz gestülpten Fahrzeugsitz-Schutzbezug mit einer Fahrzeugquerachse korreliert.

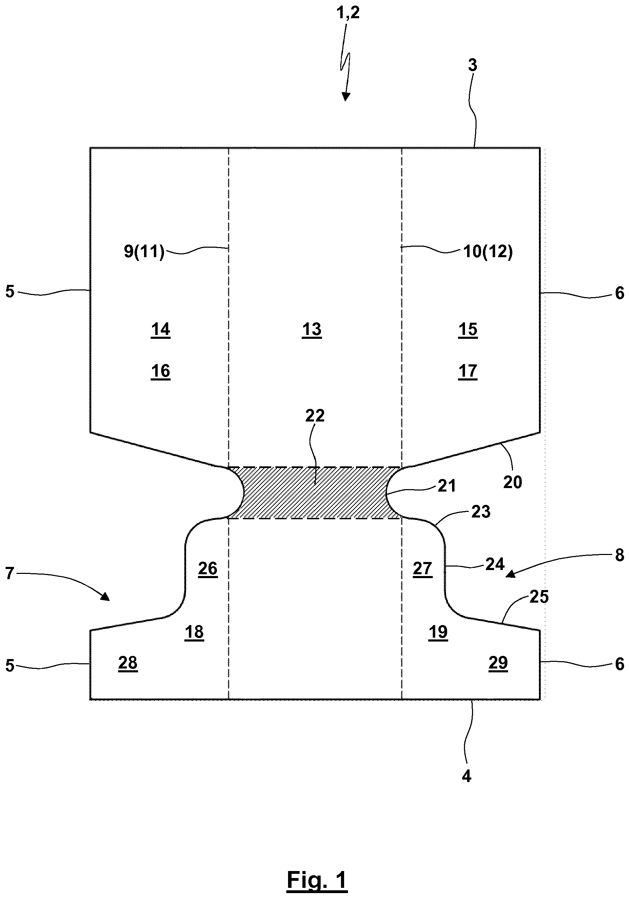

**Fig. 1** zeigt eine Materialbahn 1 eines Fahrzeugsitz-Schutzbezuges 2. Die Materialbahn 1 ist in Fig. 1 in einem ebenen, abgeflachten Zustand dargestellt. Die Materialbahn 1 verfügt in der Draufsicht über eine grundsätzlich rechteckige Außenkontur mit einem oberen Rand 3 und einem unteren Rand 4, die geradlinig und in Querrichtung orientiert sind, sowie seitlichen Rändern 5, 6, die in Längsrichtung orientiert sind und (bis auf konkave Verläufe 7, 8) ebenfalls geradlinig ausgebildet sind. Die konkaven Verläufe 7, 8 sind vorzugsweise mittels eines Ausschnitts oder eine Ausstanzung aus einem Abschnitt eines Halbzeugs mit rechteckigem Querschnitt hergestellt.

Gestrichelt sind in Fig. 1 Faltlinien 9, 10 für Faltungen 11, 12 gekennzeichnet. Die Faltlinien 9, 10 erstrecken sich parallel zueinander und parallel zu den geradlinigen Teilbereichen der Ränder 5, 6 in Längsrichtung. Die Faltlinien 9, 10 trennen einen (hinsichtlich der lateralen Erstreckung) mittigen Bereich 13 von seitlichen Bereichen 14, 15.

Durch die konkaven Verläufe 7, 8 sind die seitlichen Bereiche 14, 15 jeweils aufgeteilt in obere Seitenstreifen 16, 17 sowie untere Seitenstreifen 18, 19. Die konkaven Verläufe 7, 8 sind jeweils identisch, aber spiegelsymmetrisch zur Längsachse ausgebildet. Die konkaven Verläufe 7, 8 besitzen jeweils einen Übergangsverlauf 20, mit welchem die oberen Seitenstreifen 16, 17 von dem jeweiligen geradlinigen Teil des Randes 5, 6 übergehen bis zur zugeordneten Faltlinie 9, 10. Für das dargestellte Ausführungsbeispiel ist der Übergangsverlauf 20 geradlinig ausgebildet. An den Übergangsverlauf 20 schließt sich nach unten ein Aussparungsverlauf 21 an. Infolge des Aussparungsverlaufs 21 ist die laterale Erstreckung des mittigen Bereichs 13 in einem Einsteckbereich 22, der in Fig. 1 schraffiert dargestellt ist, kleiner als der Abstand der Faltlinien 9, 10. Für das dargestellte Ausführungsbeispiel ist der Aussparungsverlauf 21 halbkreisförmig, kurvenförmig oder teilkreisförmig ausgebildet. Nach unten schließt sich an den Aussparungsverlauf 21 ein Übergangsverlauf 23, welcher hier kurvenförmig ohne einen Knick ausgebildet ist, an. Über den Übergangsverlauf 23 gehen die Verläufe 7, 8 in einen ersten Randverlauf 24 über, welcher hier geradlinig und parallel zu den Faltlinien 9, 10 ausgebildet ist. An den ersten Randverlauf 24 schließt sich über einen weiteren Übergangsverlauf 25 der geradliniger Teil des Randes 6, der sich bis zu dem unteren Rand 4 erstreckt, an.

Die unteren Seitenstreifen 18, 19 sind jeweils mit
- einem ersten unteren Seitenstreifenabschnitt 26, 27 gebildet, die nach oben durch den Übergangsverlauf 23 begrenzt sind und lateral nach außen durch den ersten Randverlauf 24 begrenzt sind, sowie
- einem zweiten unteren Seitenstreifenabschnitt 28, 29 gebildet, die nach oben durch den ersten unteren Seitenstreifenabschnitt 26, 27 sowie den Übergangsverlauf 25 begrenzt sind, nach unten durch den unteren Rand 4 begrenzt sind sowie lateral nach außen durch einen geradlinigen Teil des Randes 5, 6, der sich bis zum dem Rand 4 erstreckt, begrenzt sind.

Die Abmessungen der Materialbahn 1 können beliebig sein. Vorzugsweise verfügt die Materialbahn 1 über die folgenden Abmessungen:
- Die Längserstreckung der Materialbahn 1 ist vorzugsweise kleiner als 2.000 mm, insbesondere im Bereich von 1.400 mm bis 2.000 mm oder 1.400 mm bis 1.800 mm.
- Der Abstand der Faltlinien 9, 10 beträgt vorzugsweise weniger als 700 mm, beispielsweise im Bereich von 450 mm bis 700 mm oder 500 mm bis 600 mm.
- Die lateralen Erstreckungen der oberen Seitenstreifen 16, 17, der ersten unteren Seitenstreifenabschnitte 26, 27 und der zweiten unteren Seitenstreifenabschnitte 28, 29 können entsprechend den relativen Anmessungen den Zeichnungen entnommen werden, wobei für diese lateralen Erstreckungen auch Abweichungen von ± 20 %, ± 10 % oder ± 5 % von den dargestellten relativen Abmessungen möglich sind.
- Der Einsteckbereich 22 weist eine Längserstreckung von 150 mm bis 400 mm, vorzugsweise von 180 bis 300 mm, auf. Die maximale Quererstreckung des Einsteckbereichs 22 beträgt beispielsweise zwischen 300 mm und 650 mm, vorzugsweise zwischen 350 mm und 500 mm.
- Das Entsprechende gilt auch für die Längserstreckungen der oberen Seitenstreifen 16, 17, der unteren Seitenstreifen 18, 19, der ersten unteren Seitenstreifenabschnitte 26, 27 und der zweiten unteren Seitenstreifenabschnitte 28, 29.

Von den vorgenannten Dimensionierungen können lediglich einzelne, mehrere oder sämtliche bei einer Materialbahn 1 verwirklicht sein. Die konkaven Verläufe 7, 8 können hierbei auch beliebige andere Verläufe aufweisen als in Fig. 1 dargestellt.

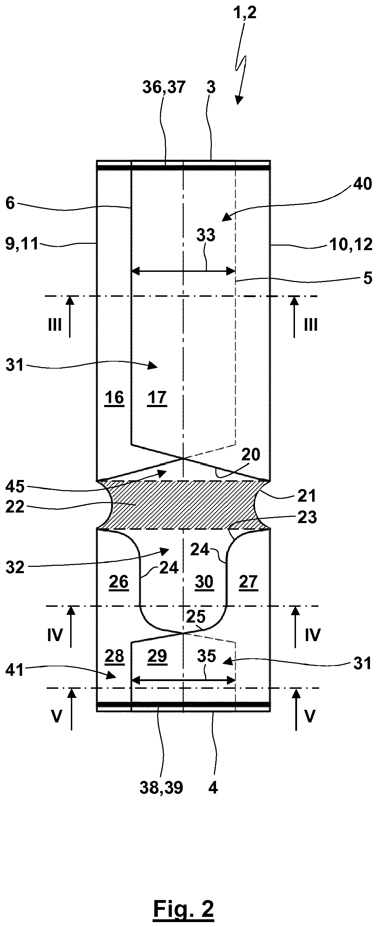

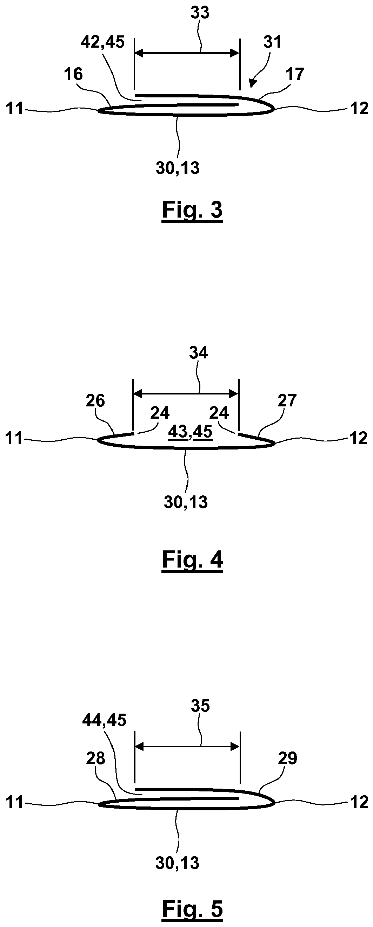

Zu dem Fahrzeugsitz-Schutzbezug 2 gemäß **Fig. 2** wird die Materialbahn 1 entlang der Faltlinien 9, 10 gefaltet. Fig. 2 zeigt eine Draufsicht auf die Rückseite des Fahrzeugsitz-Schutzbezuges 2. Der mittige Bereich 13 bildet dann eine Vorderlage 30 des Fahrzeugsitz-Schutzbezuges 2, die hier von der Rücklage 31 (bis auf den Bereich einer Ausnehmung 32 der Rücklage 31) abgedeckt ist. Die lateralen Dimensionen der oberen Seitenstreifen 16, 17 sind so gewählt, dass sich infolge der Faltungen 11, 12 eine Überlappung 33 bildet, deren laterale Erstreckung für das dargestellte Ausführungsbeispiel mehr als die Hälfte des lateralen Abstandes der Faltlinien 9, 10 beträgt (vgl. den Querschnitt III-III in **Fig. 3**).

Hingegen bilden die ersten unteren Seitenstreifenabschnitte 26, 27 keine Überlappung (vgl. den Querschnitt IV-IV gemäß **Fig. 4**). Vielmehr besitzen hier die ersten Randverläufe 24 einen Abstand 34, der für das dargestellte Ausführungsbeispiel ungefähr die Hälfte des Abstandes der Faltlinien 9, 10 beträgt.

Im Bereich der zweiten unteren Seitenstreifenabschnitte 28, 29 besitzen diese eine Überlappung 35, welche der Überlappung 33 entsprechen kann (vgl. den Querschnitt V-V gemäß **Fig. 5**).

Die Ausnehmung 32 der Rücklage ist in Längsrichtung begrenzt nach oben durch die Übergangsverläufe 25 sowie nach unten durch die Übergangsverläufe 23, die ersten Randverläufe 24 und den Übergangsverlauf 25, wie insbesondere in Fig. 2 zu erkennen ist. Im Bereich des Einsteckbereichs 22 der Vorderlage 30, also zwischen den Aussparungsverläufen 21, erstreckt sich die Ausnehmung 32 der Rücklage 31 über die gesamte Quererstreckung derselben.

Im Bereich des oberen Randes 3 ist die von den beiden überlappenden oberen Seitenstreifen 16, 17 gebildete Rücklage 31 mit der von dem mittigen Bereich 13 gebildeten Vorderlage über eine Verbindung 36, hier eine Schweißnaht 37, verbunden. Für das dargestellte Ausführungsbeispiel erstreckt sich die Schweißnaht 37 über den gesamten oberen Rand 3. Im Bereich der Überlappung 33 erfolgt hierbei die Verbindung, insbesondere Verschweißung, von drei Schichten (nämlich den überlappenden Seitenstreifen 16, 17 und der Vorderlage 30), während lateral außerhalb der Überlappung 33 lediglich zwei Schichten (einer der Seitenstreifen 16, 17 und die Vorderlage 30) miteinander verschweißt sind.

Entsprechend ist an dem unteren Rand 4 die mit dem mittigen Bereich 13 gebildete Vorderlage 30 mit der Rücklage 31, die hier von den zweiten unteren Seitenstreifenabschnitten 28, 29 gebildet ist, über eine Verbindung 38, hier eine Schweißnaht 39, verbunden. Auch hier erstreckt sich die Verbindung 38, insbesondere Schweißnaht 39, über den gesamten unteren Rand 4, und im Bereich der Überlappung 35 sind drei Schichten miteinander verbunden, während lateral außerhalb der Überlappung 35 lediglich zwei Schichten miteinander verbunden sind.

Die von dem mittigen Bereich 13 gebildete Vorderlage 30 bildet gemeinsam mit den oberen Seitenstreifen 16, 17 eine obere Tasche 40, welche infolge der Verbindung 36 oder Schweißnaht 37 nach oben geschlossen ist und infolge der Ausnehmung 32 unten offen ist. Des Weiteren bildet die Vorderlage 30 mit den unteren Seitenstreifen 18, 19 eine untere Tasche 41. Infolge der Verbindung 38 oder Schweißnaht 39 ist die untere Tasche 41 nach unten geschlossen, während diese infolge der Ausnehmung 32 nach oben offen ist. Sowohl die obere Tasche 40 als auch die untere Tasche 41 sind im Querschnitt nicht randgeschlossen, sondern vielmehr randoffen ausgebildet. Hierbei ist die Randöffnung der oberen Tasche 40 von einem zwischen den Überlappungen 33 gebildeten Spalt 42 gebildet. Auch die untere Tasche 41 ist randoffen ausgebildet. Hierbei ist die Randöffnung der unteren Tasche 41 im Bereich der ersten unteren Seitenstreifenabschnitte 26, 27 mit einem Spalt 43 zwischen den ersten Randverläufen 24 entsprechend dem Abstand 34 gebildet, während die Randöffnung der unteren Tasche 41 im Bereich der zweiten unteren Seitenstreifenabschnitte 28, 29 von einem Spalt 44 der Seitenstreifenabschnitte 28, 29 im Bereich der Überlappung 35 gebildet ist. Somit ist zwischen den Verbindungen 36, 38 oder Schweißnähten 37, 39 der Fahrzeugsitz-Schutzbezug 2 im Bereich der Rücklage 31 über die gesamte Längserstreckung nicht randgeschlossen ausgebildet. Vielmehr erstreckt sich über die gesamte Länge zwischen den Verbindungen 36, 38 eine durchgehende Ausnehmung 35, die von dem Spalt 42, der Ausnehmung 32, dem Spalt 43 bzw. Abstand 34 und dem Spalt 44 gebildet ist, die unterbrechungsfrei ineinander übergehen und die durchgehende Randöffnung der Rücklage 31 bilden.

Eine Verwendung des Fahrzeugsitz-Schutzbezuges gemäß Fig. 1 bis 5 erfolgt wie folgt:
Eine Rückenlehne eines Fahrzeugsitzes wird von der Ausnehmung 32 von unten in die obere Tasche 40 eingeführt. Hierbei kann die obere Tasche im unteren Endbereich geöffnet werden, indem im unteren Endbereich die Überlappung 33 verringert wird und die oberen Seitenstreifen 16, 17 auseinandergezogen werden. Da aber die Überlappung 33 der oberen Seitenstreifen 16, 17 im Bereich der Verbindung 36 fixiert ist, nimmt trotz der Öffnung des unteren Endbereichs der oberen Tasche 40 der Querschnitt der oberen Tasche 40 vorzugsweise kontinuierlich nach oben ab. Die Rückenlehne kann dann in die obere Tasche 40 eingeschoben werden, bis die sich verjüngende obere Tasche 40 eng den oberen Endbereich der Rückenlehne einschließt. Möglich ist, dass in einem nach oben überstehenden Bereich der oberen Tasche 40 dann auch eine Kopfstütze des Fahrzeugsitzes aufgenommen ist. Vorzugsweise ist die laterale Erstreckung des oberen Randes 3 größer als die Hälfte des Umfangs der Kopfstütze, aber kleiner als die Hälfte des Umfangs der Rückenlehne im oberen Endbereich derselben.

Hieran anschließend kann dann die untere Tasche über das Sitzpolster des Fahrzeugsitzes gestülpt werden. Hierzu kann auch die untere Tasche in dem von dem unteren Rand 4 abgewandten Endbereich geöffnet werden, womit der Abstand 34 vergrößert wird und die Überlappung 35 abseits der Verbindung 38 verringert werden kann. Infolge der Fixierung der Überlappung 35 im Bereich der Verbindung 38 verjüngt sich die untere Tasche 41 in Richtung des unteren Randes 4.

Möglich ist, dass die obere Tasche 40 vollständig oder in einem oberen Teilbereich die Rückenlehne vollständig umgibt. Hingegen umgibt die untere Tasche 41 im Bereich der Seitenstreifenabschnitte 26, 27 die Seitenflächen des Sitzpolsters, während die untere Tasche 41 im Bereich der Seitenstreifenabschnitte 28, 29 die Vorderseite des Fahrzeugsitzes und u. U. auch eine Unterseite des Fahrzeugsitzes schützen.

In derart auf den Fahrzeugsitz aufgezogenem Zustand des Fahrzeugsitz-Schutzbezuges 2 kann der Einsteckbereich 22 in einen Spalt zwischen der Rückenlehne und einem Sitzpolster des Fahrzeugsitzes eingeschoben werden, wobei eine zusätzliche Sicherung des Einsteckbereichs 22 in dem Spalt mit den eingangs genannten Sicherungsmaßnahmen erfolgen kann. Da auf diese Weise dann das Material des Sitzpolsters und der Rückenlehne auch im Bereich des Spaltes durch den Einsteckbereich 22 geschützt ist, kann für eine Handhabung des mit dem Fahrzeugsitz-Schutzbezug 2 geschützten Fahrzeugsitzes ein Halte- oder Greifelement eines Roboters in diesen Spalt eingeschoben werden. Die Aussparungsverläufe 21 sind dabei derart bemessen, dass der Einsteckbereich 22 an seitlichen Begrenzungen des Schlitzes, insbesondere im Bereich von Scharnieren, herbeigeführt ist.

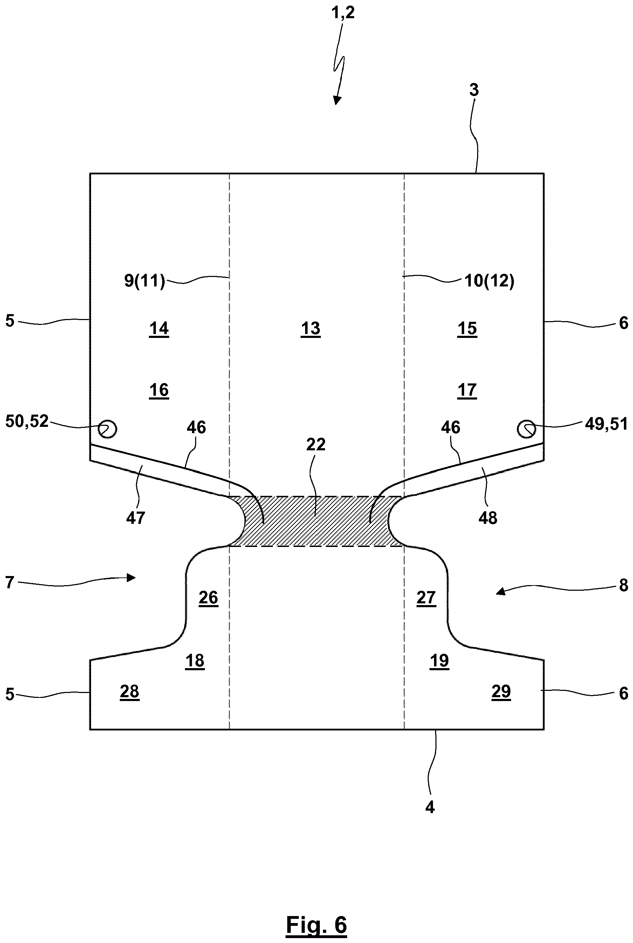

Für das in **Fig. 6** dargestellte Ausführungsbeispiel verfügt die Materialbahn 1 des Fahrzeugsitz-Schutzbezuges 2 im Bereich der oberen Seitenstreifen 16, 17 über Einschnitte, Ausstanzungen oder Perforationen 46, mittels welchen längliche, von der Materialbahn 1 gebildete Bänder 47, 48 abgetrennt sind, welche von dem Einsteckbereich 22 ausgehen.

Ist der Einsteckbereich 22 für diese Ausgestaltung in den Spalt zwischen Sitzpolster und Rückenlehne des Fahrzeugsitzes eingeschoben, können die Bänder 47, 48 hinter dem Fahrzeugsitz miteinander verknotet werden. Möglich ist auch, dass die Materialbahn 1 im unteren und lateral außenliegenden Bereich Ausnehmungen 49, 50, insbesondere Ösen 51, 52, aufweist, mit welchen die Bänder 47, 48 verknotet werden können.

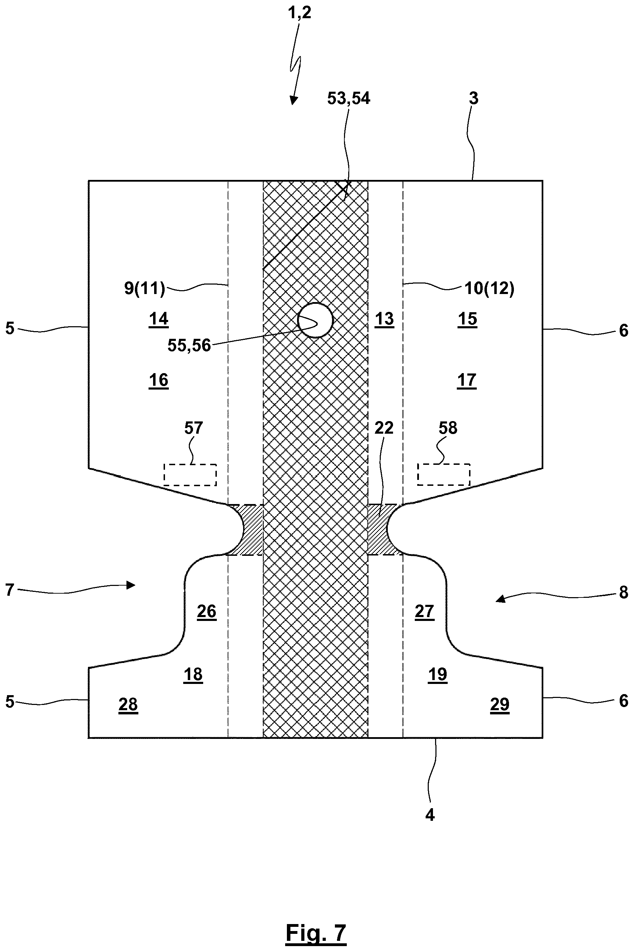

**Fig. 7** zeigt eine weitere Ausgestaltung, bei welcher die Materialbahn 1 mit einer Zusatzschicht 53 ausgestattet ist, welche hier schraffiert dargestellt ist. Für das dargestellte Ausführungsbeispiel ist die Zusatzschicht 53 mit rechteckiger Außenkontur ausgebildet und erstreckt sich über die gesamte Längserstreckung der Materialbahn 1. Die Zusatzschicht 53 ist auf der Vorderlage 30 appliziert und besitzt eine laterale Erstreckung, welche kleiner ist als die laterale Erstreckung des mittigen Bereichs 13 bzw. der Vorderlage 30. Die Zusatzschicht 53 ist hierbei auf der Innenseite, also der dem Fahrzeugsitz zugewandten Seite der Materialbahn 1 angeordnet und verfügt über eine Oberfläche, eine Beschichtung, einen Klebstoff und/oder eine Rauigkeit derart, dass die Anhaftung der Materialbahn 1 an dem Fahrzeugsitz infolge der Zusatzschicht 53 verbessert ist. Vorzugsweise handelt es sich bei der Zusatzschicht 53 um eine Kunststofffolie 54. Diese kann in beliebiger Weise auf die Materialbahn 1 aufgebracht und mit dieser verbunden sein. So kann beispielsweise die Kunststofffolie 54 auf die Materialbahn 1 extrudiert sein oder eine separate Kunststofffolie 54 kann zugeführt werden und mit der Materialbahn 1 über Kalandrieren, Aufkleben, Kaschieren u. ä. verbunden sein.

Als eine optionale Besonderheit verfügt die Materialbahn 1 gemäß Fig. 7 über eine Ausnehmung 55, die hier als nicht beschränkendes Beispiel im Bereich der Vorderlage 30, insbesondere im Bereich der oberen Tasche 40, angeordnet ist. Die Ausnehmung 55 bildet ein Sichtfenster 56, durch welches auch bei an sich blickdichter Ausbildung der Materialbahn 1 der Fahrzeugsitz durch den Fahrzeugsitz-Schutzbezug 2 sichtbar ist. Möglich ist, dass sich die Zusatzschicht 53, insbesondere die Kunststofffolie 54 in dann durchsichtiger Ausführung, über das Sichtfenster 56 erstreckt, so dass trotz der Ausnehmung 55 die Vorderlage 30 geschlossen ausgebildet ist.

Als weitere optionale Besonderheit sind in Fig. 7 gestrichelt zwei Zusatzschichten 57, 58 dargestellt. Ist der Fahrzeugsitz-Schutzbezug 2 auf einen Fahrzeugsitz aufgezogen und der Einsteckbereich 22 erstreckt sich durch einen dann in jedem Fall durchgehenden Spalt zwischen der Rückenlehne und dem Sitzpolster bis auf die Rückseite des Fahrzeugsitzes, kann der rückseitig überstehende Bereich des Einsteckbereichs 22 nach oben geklappt werden und mit der klebend ausgebildeten Zusatzschicht 57, 58 verbunden werden, womit auch ein Spannen des Fahrzeugsitz-Schutzbezuges 2 in Längsrichtung auf dem Fahrzeugsitz herbeigeführt werden kann.

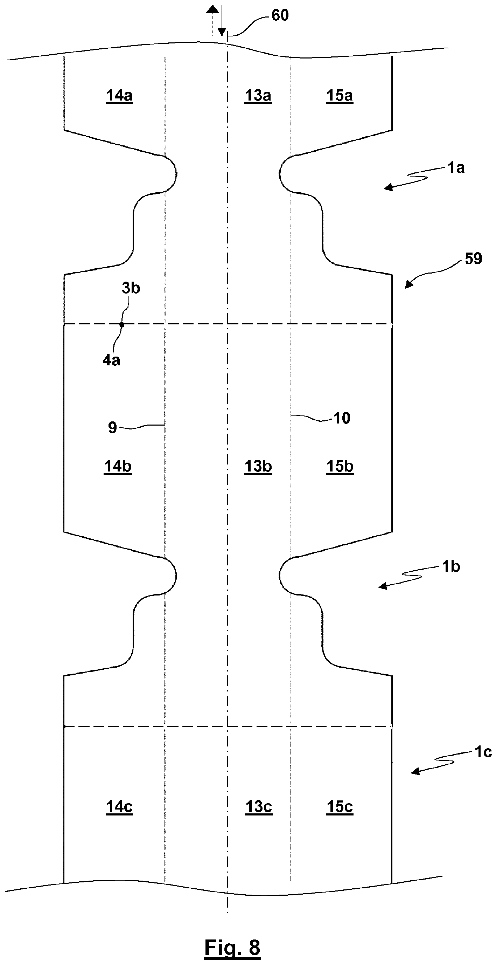

**Fig. 8** zeigt ein Halbzeug 59 zur Bildung mehrerer in Richtung der Längsachse desselben und eine Förderrichtung bei der Herstellung hintereinander unmittelbar benachbart angeordneter Materialbahnen 1a, 1b, 1c, ... Hier kennzeichnen die zu den Bezugszeichen ergänzten Buchstaben a, b, c, ... entsprechende Bauelemente der unterschiedlichen Materialbahnen 1a, 1b, 1c, ... bzw. Fahrzeugsitz-Schutzbezüge. 2a, 2b, 2c, ... Aus dem Halbzeug 59 können Fahrzeugsitz-Schutzbezüge 2a, 2b, 2c, ... wie folgt hergestellt werden:
Das Halbzeug 59 wird beispielsweise von einer Rolle entnommen und entlang einer Längsachse 60 in eine der mit den Pfeilen angedeuteten Förderrichtungen kontinuierlich oder intermittierend gefördert. Hierbei entspricht die Breite des Halbzeugs 59 der maximalen lateralen Erstreckung der seitlichen Ränder 5, 6 einer Materialbahn 1, während die Längserstreckung des Halbzeugs 59 ein Vielfaches der Längserstreckung einer Materialbahn 1 für einen Fahrzeugsitz-Schutzbezug 2 beträgt.

In einem anschließenden Verfahrensschritt werden durch Ausstanzen oder Ausschneiden die konkaven Verläufe 7, 8 erzeugt.

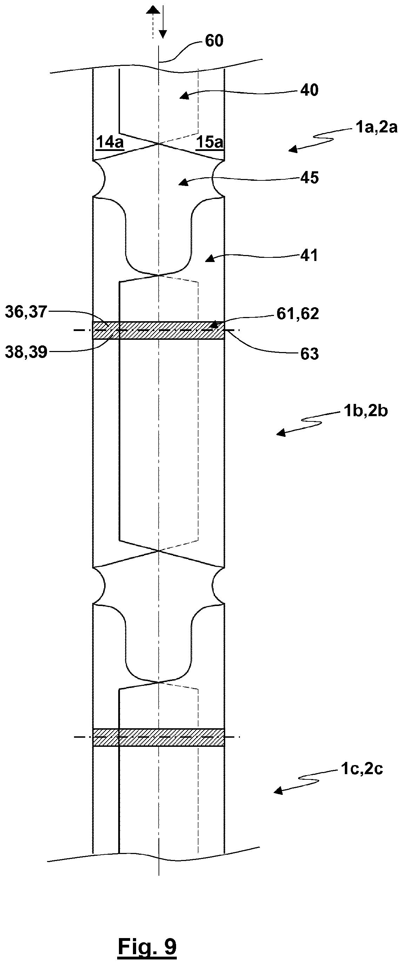

Hieran anschließend erfolgt das Falten der seitlichen Bereiche 14, 15 entlang der Faltlinien 9, 10 unter Herbeiführung der Faltungen 11, 12 (vgl. **Fig. 9**).

In einem nächsten Verfahrensschritt werden im Übergangsbereich zwischen den einzelnen, bisher noch verbundenen Materialbahnen 1a, 1b, 1c Verbindungsbereiche 61 oder Schweißbereiche 62 erzeugt, welche sich über die gesamte Breite erstrecken und eine gewisse Längserstreckung aufweisen, insbesondere eine Erstreckung in Förderrichtung 60 im Bereich von 0,5 cm bis 4 cm, vorzugsweise im Bereich von 0,8 cm bis 2 cm.

Hieran anschließend werden die Verbindungsbereiche 61, 62 mittels eines in lateraler Richtung orientierten Durchtrennung oder einer Perforation 63 getrennt, die mittig zur Erstreckung der Verbindungsbereiche 61 oder Schweißbereiche 62 in Förderrichtung 60 erfolgt. Der oberhalb der Durchtrennung oder einer Perforation 63 angeordnete Teil des Verbindungsbereichs 61 bildet dann die untere Verbindung 38 eines Fahrzeugsitz-Schutzbezuges 2a im Bereich des unteren Rands 4, während der unterhalb des Schnitts 63 verbleibende Teil des Verbindungsbereichs 61 dann die obere Verbindung 36 an dem oberen Rand 3 eines benachbarten Fahrzeugsitz-Schutzbezuges 2b bildet. Vorzugsweise werden sukzessive die konkaven Verläufe 7, 8, die Verbindungsbereiche 61 und der Schnitt 63 an einer Materialbahn 1a, 1b, 1c, ... erzeugt.

Erfindungsgemäß wird insbesondere ein Fahrzeugsitz-Schutzbezug 2 hergestellt, welcher die Oberseite der Rückenlehne, Seitenflächen der Rückenlehne, Seitenflächen des Sitzpolsters und eine Vorderseite des Sitzpolsters weitestgehend abdeckt und bei welchen die Länge der kumulierten Verbindungen 36, 38 bzw. die Gesamtlänge der Schweißnähte 37, 39 weniger als 1200mm beträgt. Wie den Fig. 8, 9 zu entnehmen ist, erfolgt die Förderung während der Herstellung bei Ausrichtung der Materialbahnen 1a, 1b, 1c mit ihren Längsachsen und damit der Längsachse des Fahrzeugsitz-Schutzbezuges 2 parallel zur Förderrichtung 60. Die laterale Erstreckung der Materialbahn 1 ist dann vorzugsweise maximal 1.600 mm, wobei bei taktweisem Betrieb dann ein Vorschub entsprechend der Längserstreckung der Materialbahn 1, vorzugsweise mit weniger als 2.000 mm, erfolgt.

Die Schweißnähte 37, 39 werden vorzugsweise mittels eines Ultraschall-Schweißens herbeigeführt, was mit einem Stillstand im Bereich von Ultraschall-Schweißleisten von weniger als 1 s erfolgen kann.

### BEZUGSZEICHENLISTE

- 1: Materialbahn
- 2: Fahrzeugsitz-Schutzbezug
- 3: oberer Rand
- 4: unterer Rand
- 5: seitlicher Rand (links)
- 6: seitlicher Rand (rechts)
- 7: konkaver Verlauf (links)
- 8: konkaver Verlauf (rechts)
- 9: Faltlinie (links)
- 10: Faltlinie (rechts)
- 11: Faltung (links)
- 12: Faltung (rechts)
- 13: mittiger Bereich
- 14: seitlicher Bereich (links)
- 15: seitlicher Bereich (rechts)
- 16: oberer Seitenstreifen (links)
- 17: oberer Seitenstreifen (rechts)
- 18: unterer Seitenstreifen (links)
- 19: unterer Seitenstreifen rechts)
- 20: Übergangsverlauf
- 21: Aussparungsverlauf
- 22: Einsteckbereich
- 23: Übergangsverlauf
- 24: erster Randverlauf
- 25: Übergangsverlauf
- 26: erster unterer Seitenstreifenabschnitt (links)
- 27: erster unterer Seitenstreifenabschnitt (rechts)
- 28: zweiter unterer Seitenstreifenabschnitt (links)
- 29: zweiter unterer Seitenstreifenabschnitt (rechts)
- 30: Vorderlage
- 31: Rücklage
- 32: Ausnehmung
- 33: Überlappung
- 34: Abstand
- 35: Überlappung
- 36: Verbindung (oben)
- 37: Schweißnaht (oben)
- 38: Verbindung (unten)
- 39: Schweißnaht (unten)
- 40: obere Tasche
- 41: untere Tasche
- 42: Spalt
- 43: Spalt
- 44: Spalt
- 45: Ausnehmung, Spalt
- 46: Einschnitt
- 47: Band
- 48: Band
- 49: Ausnehmung
- 50: Ausnehmung
- 51: Öse
- 52: Öse
- 53: Zusatzschicht
- 54: Kunststofffolie
- 55: Ausnehmung
- 56: Sichtfenster
- 57: Zusatzschicht
- 58: Zusatzschicht
- 59: Halbzeug
- 60: Förderrichtung
- 61: Verbindungsbereich
- 62: Schweißbereich
- 63: Durchtrennung, Perforation

## Patentansprüche

1. Fahrzeugsitz-Schutzbezug (2) mit
a) einer Vorderlage (30), welche für einen über einen Fahrzeugsitz gestülpten Fahrzeugsitz-Schutzbezug (2) auf der Vorderseite des Fahrzeugsitzes angeordnet werden kann,
b) einer Rücklage (31), welche für einen über einen Fahrzeugsitz gestülpten Fahrzeugsitz-Schutzbezug (2) auf der Rückseite des Fahrzeugsitzes angeordnet werden kann und
c) einer von der Vorderlage (30) und der Rücklage (31) begrenzten oberen Tasche (40), die einen zumindest teilweise geschlossenen oberen Rand (3) aufweist, wobei
d) die Vorderlage (30) und die Rücklage (31) zusammen aus einer einstückigen gefalteten Materialbahn (1) hergestellt sind und
e) der Fahrzeugsitz-Schutzbezug (2) eine von der Vorderlage (30) und der Rücklage (31) begrenzte unteren Tasche (41) aufweist, die über einen zumindest teilweise geschlossenen unteren Rand (4) verfügt,
**dadurch gekennzeichnet, dass**
f) der Fahrzeugsitz-Schutzbezug (2) zwischen dem zumindest teilweise geschlossenen unteren Rand (4) und dem zumindest teilweise geschlossenen oberen Rand (3) über die gesamte Längserstreckung
fa) eine durchgehende Ausnehmung (45) aufweist und
fb) infolge der Ausnehmung (45) im Querschnitt randoffen ausgebildet ist.

2. Fahrzeugsitz-Schutzbezug (2) nach Anspruch 1, **dadurch gekennzeichnet, dass**
a) ein mittiger Bereich (13) der Materialbahn (1) die Vorderlage (30) bildet,
b) seitliche Bereiche (14, 15) der Materialbahn (1) so gefaltet sind, dass diese die Rücklage (31) bilden,
c) zur Bildung des zumindest teilweise geschlossenen oberen Rands (3) der oberen Tasche (40) obere Ränder der seitlichen Bereiche (14, 15) der Materialbahn (1) über eine Verbindung (36) mit dem oberen Rand des mittigen Bereichs (13) der Materialbahn (1) verbunden sind,
d) zur Bildung des zumindest teilweise geschlossenen unteren Rands (4) der unteren (41) Tasche untere Ränder der seitlichen Bereiche (14, 15) der Materialbahn (1) über eine Verbindung (38) mit dem unteren Rand des mittigen Bereichs (13) der Materialbahn (1) verbunden sind,
e) die Ausnehmung (45) der Rücklage (31) von seitlichen Rändern (5, 6) der Materialbahn (1) begrenzt ist.

3. Fahrzeugsitz-Schutzbezug (2) nach Anspruch 2, **dadurch gekennzeichnet, dass** die Verbindung (36; 38)
a) der unteren Ränder der seitlichen Bereiche (14, 15) der Materialbahn (1) mit dem unteren Rand des mittigen Bereichs (13) der Materialbahn (1) und/oder
b) der oberen Ränder der seitlichen Bereiche (14, 15) der Materialbahn (1) mit dem oberen Rand des mittigen Bereichs (13) der Materialbahn (1)
eine Schweißnaht (37; 39) ist.

4. Fahrzeugsitz-Schutzbezug (2) nach Anspruch 2 oder 3, **dadurch gekennzeichnet, dass** eine Verbindung (36) oder Schweißnaht (37) unmittelbar an den oberen Rand (3) der oberen Tasche (40) angrenzt und eine Verbindung (38) oder Schweißnaht (39) unmittelbar an den unteren Rand der unteren Tasche (41) angrenzt.

5. Fahrzeugsitz-Schutzbezug (2) nach einem der Ansprüche 2 bis 4, **dadurch gekennzeichnet, dass** die seitlichen Ränder (5, 6) der seitlichen Bereiche (14, 15) der Materialbahn (1) konkave Verläufe (7, 8) aufweisen.

6. Fahrzeugsitz-Schutzbezug (2) nach Anspruch 5, **dadurch gekennzeichnet, dass** die konkaven Verläufe (7; 8) der seitlichen Ränder (5, 6) der Materialbahn (1)
a) einen Aussparungsverlauf (21) aufweisen, in welchem die Breite der Materialbahn (1) kleiner ist als der laterale Abstand von Faltungen (11, 12) der Materialbahn (1), und
b) wobei der Aussparungsverlauf (21) einen oberen Seitenstreifen (16; 17) eines seitlichen Bereichs (14; 15) der Materialbahn (1) von einem unteren Seitenstreifen (18; 19) des seitlichen Bereichs (14; 15) der Materialbahn (1) trennt.

7. Fahrzeugsitz-Schutzbezug (2) nach Anspruch 6, **dadurch gekennzeichnet, dass**
a) der obere Seitenstreifen (16; 17) eine konstante laterale Erstreckung besitzt und/oder
b) der untere Seitenstreifen (18; 19)
ba) einen ersten unteren Seitenstreifenabschnitt (26; 27) aufweist, welcher sich von dem unteren Rand (4) der unteren Tasche (41) nach oben erstreckt, und
bb) einen zweiten unteren Seitenstreifenabschnitt (28; 29) aufweist, welcher sich nach oben an den ersten unteren Seitenstreifenabschnitt (26; 27) anschließt und eine kleinere laterale Erstreckung aufweist als der erste untere Seitenstreifenabschnitt (26; 27).

8. Fahrzeugsitz-Schutzbezug (2) nach einem der Ansprüche 2 bis 7, **dadurch gekennzeichnet, dass** die seitlichen Bereiche (14; 15) der Materialbahn (1) mindestens eine Überlappung (33; 35) aufweisen.

9. Fahrzeugsitz-Schutzbezug (2) nach einem der vorhergehenden Ansprüche, **dadurch gekennzeichnet, dass** die Materialbahn (1) eine Ausnehmung (55; 49, 50) aufweist, welche insbesondere ein Sichtfenster (56) des Fahrzeugsitz-Schutzbezuges oder eine randverstärkte oder nicht randverstärkte Öse (51, 52) für ein Befestigungs- oder Spannmittel bildet.

10. Fahrzeugsitz-Schutzbezug (2) nach einem der vorhergehenden Ansprüche, **dadurch gekennzeichnet, dass** zumindest auf einen Teilbereich der Materialbahn (1) eine Zusatzschicht (53; 57) aufgebracht ist.

11. Fahrzeugsitz-Schutzbezug (2) nach einem der vorhergehenden Ansprüche, **dadurch gekennzeichnet, dass** die Rücklage (31) eine Ausnehmung (32) aufweist, insbesondere eine U-förmige Ausnehmung im Bereich des Sitzpolsters und/oder eine Ausnehmung im Bereich eines Einsteckbereichs (22) der Vorderlage (30) oder im rückseitigen Übergangsbereich der Rücklage (31) von der Rückenlehne zu dem Sitzpolster des Fahrzeugsitzes.

12. Fahrzeugsitz-Schutzbezug (2) nach einem der vorhergehenden Ansprüche, **dadurch gekennzeichnet, dass** die Materialbahn (1) aus einem Non-Woven-Material oder einem Vlies besteht.

13. Fahrzeugsitz-Schutzbezug (2) nach Anspruch 12, **dadurch gekennzeichnet, dass** die Materialbahn (1) aus dem Non-Woven-Material oder Vlies ein Flächengewicht im Bereich von 12 gr/m² bis 60 gr/m² aufweist.

14. Fahrzeugsitz-Schutzbezug (2) nach einem der vorhergehenden Ansprüche, **dadurch gekennzeichnet, dass** die Materialbahn (1) eine Luftdurchlässigkeit von zumindest 2000 mm/s aufweist.

15. Fahrzeugsitz-Schutzbezug (2) nach einem der Ansprüche 2 bis 14, **dadurch gekennzeichnet, dass** die Gesamtlänge der oder von hergestellten Verbindungen (36, 38) zwischen der Vorderlage (30) und der Rücklage (31) an einem Fahrzeugsitz-Schutzbezug (2) kleiner als 1400 mm ist.

16. Fahrzeugsitz-Schutzbezug (2) nach einem der vorhergehenden Ansprüche, **dadurch gekennzeichnet, dass** die maximale laterale Erstreckung der Materialbahn (1) nicht größer ist als 1600 mm.

17. Fahrzeugsitz-Schutzbezug (2) nach einem der vorhergehenden Ansprüche, **dadurch gekennzeichnet, dass** die Materialbahn (1) antistatisch ausgebildet ist.

18. Verfahren zur Herstellung eines Fahrzeugsitz-Schutzbezuges (2) nach einem der vorhergehenden Ansprüche, **dadurch gekennzeichnet, dass**
a) ein bahnenförmiges Halbzeug (59) bereitgestellt wird,
b) aus dem bahnenförmigen Halbzeug (59) mittels Einschnitten oder Ausstanzungen eine Materialbahn (1) hergestellt wird, deren seitliche Ränder (5, 6) einen konkaven Verlauf (7, 8) aufweisen,
c) seitliche Bereiche (14, 15) der Materialbahn (1) so gefaltet werden, dass diese gemeinsam die Rücklage (31) bilden, während ein mittiger Bereich (13) der Materialbahn (1) die Vorderlage (30) bildet,
d) obere Ränder der seitlichen Bereiche (14, 15) der Materialbahn (1) mit dem oberen Rand des mittigen Bereichs (13) der Materialbahn (1) verbunden werden, womit der zumindest teilweise geschlossene obere Rand (3) der oberen Tasche (40) hergestellt ist,
e) untere Ränder der seitlichen Bereiche (14, 15) der Materialbahn (1) mit dem unteren Rand des mittigen Bereichs (13) der Materialbahn (1) verbunden werden, womit der zumindest teilweise geschlossene untere Rand (4) der unteren Tasche (41) hergestellt ist.

19. Verfahren nach Anspruch 18, **dadurch gekennzeichnet, dass**
a) ein Verbindungsbereich (61) zwischen den seitlichen Bereichen (14, 15) der Materialbahn (1) mit dem mittigen Bereichs (13) hergestellt wird und
b) der Verbindungsbereich (61) durch eine Durchtrennung oder Perforation (63) aufgeteilt wird
ba) in eine Verbindung (38), die an einem ersten Fahrzeugsitz-Schutzbezug (2a) die unteren Ränder der seitlichen Bereiche (14a, 15a) der Materialbahn (1a) mit dem unteren Rand des mittigen Bereichs (13a) verbindet, und
bb) in eine Verbindung (39), die an einem zweiten benachbarten Fahrzeugsitz-Schutzbezug (2b) die oberen Ränder der seitlichen Bereiche (14b, 15b) der benachbarten Materialbahn (1b) mit dem oberen Rand des mittigen Bereichs (13b) verbindet.

20. Verfahren zur Verwendung eines Fahrzeugsitz-Schutzbezuges (2) nach einem der Ansprüche 1 bis 17, **dadurch gekennzeichnet, dass**
a) die obere Tasche (40) des Fahrzeugsitz-Schutzbezuges (2) über eine Rückenlehne des Fahrzeugsitzes gestreift wird und
b) die untere Tasche (41) des Fahrzeugsitz-Schutzbezuges (2) über ein Sitzpolster des Fahrzeugsitzes gestreift wird.

21. Verfahren nach Anspruch 20, **dadurch gekennzeichnet, dass** ein Einsteckbereich (22) des Fahrzeugsitz-Schutzbezuges (2) in einen Spalt zwischen der Rückenlehne des Fahrzeugsitzes und dem Sitzpolster des Fahrzeugsitzes eingeführt wird.

22. Verfahren nach Anspruch 21, **dadurch gekennzeichnet, dass** der Einsteckbereich (22) des Fahrzeugsitz-Schutzbezuges (2) in dem Spalt zwischen der Rückenlehne des Fahrzeugsitzes und dem Sitzpolster des Fahrzeugsitzes gesichert wird.

## Claims

1. Vehicle seat protective cover (2) comprising
a) a front sheet (30) which can be arranged on a front side of the vehicle seat when the vehicle seat protective cover (2) is imposed on a vehicle seat,
b) a rear sheet (31) which can be arranged on the rear side of the vehicle seat when the vehicle seat protective cover (2) is imposed on a vehicle seat and
c) an upper pocket (40) which is limited by the front sheet (30) and the rear sheet (31), the upper pocket (40) comprising an at least partially closed upper edge (3),
d) the front sheet (30) and the rear sheet (31) being manufactured together from a one-pieced web (1) and
e) the vehicle seat protective cover (2) comprising a lower pocket (41) which is limited by the front sheet (30) and the rear sheet (31), the lower pocket (41) comprising an at least partially closed lower edge (4),
**characterized in that**
f) the vehicle seat protective cover (2) over the whole longitudinal extension between the at least partially closed lower edge (4) and the at least partially closed upper edge (3)
fa) comprises a continuous recess (45) and
fb) due to the recess (45) has a cross section with an open edge.

2. Vehicle seat protective cover (2) of claim 1, **characterised in that**.
a) the front sheet (30) is realized as a middle portion (13) of the web (1)
b) lateral portions (14, 15) of the web (1) are folded such that the rear sheet (31) is realized by the lateral portions (14, 15)
c) for establishing the at least partially closed upper edge (3) of the upper pocket (40) upper edges of the lateral portions (14, 15) of the web (1) are connected by a connection (36) to the upper edge of the middle portion (13) of the web (1)
d) for establishing the at least partially closed lower edge (4) of the lower pocket (41) lower edges of the lateral portions (14, 15) of the web (1) are connected by a connection (38) to the lower edge of the middle portion (13) of the web (1)
e) the recess (45) of the rear sheet (31) is limited by lateral edges (5, 6) of the web (1).

3. Vehicle seat protective cover (2) of claim 2, **characterized in that** the connection (36; 38)
a) of the lower edges of the lateral portions (14, 15) of the web (1) to the lower edge of the middle portion (13) of the web (1) and/or
b) of the upper edges of the lateral portions (14, 15) of the web (1) to the upper edge of the middle portion (13) of the web (1)
is a welding (37; 39).

4. Vehicle seat protective cover (2) of claim 2 or 3, **characterized in that** a connection (36) or welding (37) adjoins the upper edge (3) of the upper pocket (40) and a connection (38) or welding (39) adjoins the lower edge of the lower pocket (41).

5. Vehicle seat protective cover (2) of one of claims 2 to 4, **characterized in that** the lateral edges (5, 6) of the lateral portions (14, 15) of the web (1) comprise concave contours (7, 8).

6. Vehicle seat protective cover (2) of claim 5, **characterized in that** the concave contours (7; 8) of the lateral edges (5, 6) of the web (1)
a) comprise a recess contour (21) wherein the width of the web (1) is smaller than the lateral distance of foldings (11, 12) of the web (1) and
b) the recess contour (21) separates an upper lateral band (16; 17) of a lateral portion (14, 15) of the web (1) from a lower lateral band (18; 19) of the lateral portion (14; 15) of the web (1).

7. Vehicle seat protective cover (2) of claim 6, **characterized in that**
a) the upper lateral band (16; 17) comprises a constant lateral extension and/or
b) the lower lateral band (18; 19)
ba) comprises a first lower lateral band section (26; 27) which extends from the lower edge (4) of the lower pocket (41) in upper direction
bb) comprises a second lower lateral band section (28; 29) which in upper direction follows to the first lower lateral band section (26; 27) and comprises a smaller lateral extension than the first lower lateral band section (26; 27).

8. Vehicle seat protective cover (2) of one of claims 2 to 7, **characterized in that** the lateral portions (14; 15) of the web (1) comprise at least one overlap (33; 35).

9. Vehicle seat protective cover (2) of one of the preceding claims, **characterized in that** the web (1) comprises a recess (55; 49, 50) which in particular is a viewing window (56) of the vehicle seat protective cover or a lug (51, 52) having a enforced edge or no enforced edge and being designated for a mounting means or tension means.

10. Vehicle seat protective cover (2) of one of the preceding claims, **characterized in that** an additional layer (53; 57) is applied upon at least a sub-portion of the web (1).

11. Vehicle seat protective cover (2) of one of the preceding claims, **characterized in that** the rear sheet (31) comprises a recess (32), in particular in U-shape recess in the region of the seat cushion and/or a recess in the region of an insertion region (22) of the front sheet (30) or in a rear-sided transition region of the rear sheet (31) from the backrest to the seat cushion of the vehicle seat.

12. Vehicle seat protective cover (2) of one of the preceding claims, **characterized in that** the web (1) consists of a non-woven-material or a mat of fibres or a fleece.

13. Vehicle seat protective cover (2) of claim 12, **characterized in that** the web (1) made of a non-woven-material or mat of fibres or fleece has a weight per area in the region of 12 gr/m² to 60 gr/m².

14. Vehicle seat protective cover (2) of one of the preceding claims, **characterized in that** the web (1) has a permeability for air of at least 2000 mm/s.

15. Vehicle seat protective cover (2) of one of claims 2 to 14, **characterized in that** the overall length between produced connections (36, 38) or between the produced connections (36, 38) of the front sheet (30) to the rear sheet (31) at the vehicle seat protective cover (2) is smaller than 1400 mm.

16. Vehicle seat protective cover (2) of one of the preceding claims, **characterized in that** the maximum of the lateral extension of the web (1) does not exceed 1600 mm.

17. Vehicle seat protective cover (2) of one of the preceding claims, **characterized in that** the web (1) is antistatic.

18. Method for manufacturing a vehicle seat protective cover (2) of one of the proceeding claims, **characterized in that**
a) a web-shaped semi-product (59) is provided,
b) a web (1) is manufactured from the web-shaped semi-product (59) by means of cuts or punches, the lateral edges (5, 6) of the web (1) comprising a concave contour (7, 8),
c) lateral portions (14, 15) of the web (1) are folded such that these together form the rear sheet (31) whereas a middle portion (13) of the web (1) forms the front sheet (30)
d) upper edges of the lateral portions (14, 15) of the web (1) are connected to the upper edge of the middle portion (13) of the web (1), in this way the at least partially closed upper edge (3) of the upper pocket (40) being produced,
e) lower edges of the lateral portions (14, 15) of the web (1) are connected to the lower edge of the middle portion (13) of the web (1), in this way the at least partially closed lower edge (4) of the lower pocket (41) being produced.

19. Method of claims 18, **characterized in that**
a) a connecting region (61) connecting the lateral portions (14, 15) of the web (1) to the middle portion (13) is produced and
b) the connecting region (61) is separated by a cut or perforation (63) into
ba) a connection (38) which at a first vehicle seat protective cover (2a) connects the lower edges of the lateral portions (14a, 15a) of the web (1a) to the lower edge of the middle portion (13a) and
bb) a connection (39) which connects at a second adjacent vehicle seat protective cover (2b) the upper edges of the lateral portions (14b, 15b) of the adjacent web (1b) to the upper edge of the middle portion (13b).

20. Method for using a vehicle seat protective cover (2) of one of claims 1 to 17, **characterized in that**
a) the upper pocket (40) of the vehicle seat protective cover (2) is slid over a backrest of the vehicle seat and
b) the lower pocket (41) of the vehicle seat protective cover (2) is slid over a seat cushion of the vehicle seat.

21. Method of claim 20, **characterized in that** an insertion region (22) of the vehicle seat protective cover (2) is introduced into a gap between the backrest of the vehicle seat and the seat cushion of the vehicle seat.

22. Method of claim 21, **characterized in that** the insertion region (22) of the vehicle seat protective cover (2) is secured in the gap between the backrest of the vehicle seat and the seat cushion of the vehicle seat.

## Revendications

1. Housse de protection de siège de véhicule (2) avec
a) une couche avant (30), qui peut être disposée, pour une housse de protection de siège de véhicule (2) enfilée sur un siège de véhicule, sur le côté avant du siège de véhicule,
b) une couche arrière (31) qui peut être disposée, pour une une housse de protection de siège de véhicule (2) enfilée sur un siège de véhicule, sur le côté arrière du siège de véhicule et
c) une poche supérieure (40) limitée par la couche avant (30) et la couche arrière (31), qui comprend un bord supérieur (3) au moins partiellement fermé,
d) la couche avant (30) et la couche arrière (31) étant fabriquées ensemble à partir d'une bande de matériau (1) d'une seule pièce pliée et
e) la housse de protection de siège de véhicule (2) comprenant une poche inférieure (41) limitée par la couche avant (30) et la couche arrière (31), qui comprend un bord inférieur (4) au moins partiellement fermé,
**caractérisée en ce que**
f) la housse de protection de siège de véhicule (2), entre le bord inférieur (4) au moins partiellement fermé et le bord supérieur (3) au moins partiellement fermé, sur toute l'extension longitudinale,
fa) comprend un évidement continu (45) et
fb) présente une section transversale à bord ouvert du fait de l'évidement (45).

2. Housse de protection de siège de véhicule (2) selon la revendication 1, **caractérisée en ce que**
a) une zone centrale (13) de la bande de matériau (1) constitue la couche avant (30),
b) des zones latérales (14, 15) de la bande de matériau (1) sont pliées de façon à ce que celles-ci constituent la couche arrière (31),
c) pour la formation du bord supérieur (3) au moins partiellement fermé de la poche supérieure (40), les bords supérieures des zones latérales (14, 15) de la bande de matériau (1) sont reliées, par l'intermédiaire d'une liaison (36), avec le bord supérieur de la zone centrale (13) de la bande de matériau (1),
d) pour la formation du bord inférieur (4) au moins partiellement fermé de la poche inférieure (41), les bords inférieurs des zones latérales (14, 15) de la bande de matériau (1) sont reliées, par l'intermédiaire d'une liaison (38), avec le bord inférieur de la zone centrale (13) de la bande de matériau (1),
e) l'évidement (45) de la couche arrière (31) est limité par les bords latéraux (5, 6) de la bande de matériau (1).

3. Housse de protection de siège de véhicule (2) selon la revendication 2, **caractérisée en ce que** la liaison (36, 38)
a) des bords inférieurs des zones latérales (14, 15) de la bande de matériau (1) avec le bord inférieur de la zone centrale (13) de la bande de matériau (1) et/ou
b) des bords supérieurs des zones latérales (14, 15) de la bande de matériau (1) avec le bord supérieur de la zone centrale (13) de la bande de matériau (1)
est un cordon de soudure (37, 39).

4. Housse de protection de siège de véhicule (2) selon la revendication 2 ou 3, **caractérisée en ce qu'**une liaison (36) ou un cordon de soudure (37) est directement adjacent au bord supérieur (3) de la poche supérieure (40) et une liaison (38) ou un cordon de soudure (39) est directement adjacent au bord inférieur de la poche inférieure (41).

5. Housse de protection de siège de véhicule (2) selon l'une des revendications 2 à 4, **caractérisée en ce que** les bords latéraux (5, 6) des zones latérales (14, 15) de la bande de matériau (1) présentent des contours concaves (7, 8).

6. Housse de protection de siège de véhicule (2) selon la revendication 5, **caractérisée en ce que** les contours concaves (7, 8) des bords latéraux (5, 6) de la bande de matériau (1)
a) présentent un contour d'évidement (21) dans lequel la largeur de la bande de matériau (1) est inférieure à la distance latérale des pliages (11, 12) de la bande de matériau (1) et
b) le contour d'évidement (21) séparant une bande latérale supérieure (16, 17) d'une zone latérale (14, 15) de la bande de matériau (1) d'une bande latérale inférieure (18, 19) de la zone latérale (14, 15) de la bande de matériau (1).

7. Housse de protection de siège de véhicule (2) selon la revendication 6, **caractérisée en ce que**
a) la bande latérale supérieure (16, 17) présente une extension latérale constante et/ou
b) la bande latérale inférieure (18; 19)
ba) présente une portion de bande latérale inférieure (26; 27) sui s'étend du bord inférieur (4) de la poche inférieure (41) vers le haut et
bb) présente une portion de bande latérale inférieure (28; 29) qui se raccorde vers le haut à la portion de bande latérale inférieure (26; 27) et qui présente une extension latérale inférieure à la première portion de bande latérale inférieure (26; 27).

8. Housse de protection de siège de véhicule (2) selon l'une des revendications 2 à 7, **caractérisée en ce que** les zones latérales (14; 15) de la bande de matériau (1) comprennent au moins une superposition (33; 35).

9. Housse de protection de siège de véhicule (2) selon l'une des revendications précédentes, **caractérisée en ce que** la bande de matériau (1) comprend un évidement (55; 49, 50) qui forme, plus particulièrement, une fenêtre de visualisation (56) de la housse de protection de siège de véhicule ou un oeillet (51, 52), à bords renforcés ou non renforcés, pour un moyen de fixation ou de serrage.

10. Housse de protection de siège de véhicule (2) selon l'une des revendications précédentes, **caractérisée en ce que,** au moins sur une partie de la bande de matériau (1), une couche supplémentaire (53; 57) est appliquée.

11. Housse de protection de siège de véhicule (2) selon l'une des revendications précédentes, **caractérisée en ce que** la couche arrière (31) comprend un évidement (32), plus particulièrement un évidement en forme de U, au niveau du rembourrage du siège et/ou un évidement au niveau d'une zone d'insertion (22) de la couche avant (30) ou dans la zone de transition arrière de la couche arrière (31) du dossier vers le rembourrage du siège de véhicule.

12. Housse de protection de siège de véhicule (2) selon l'une des revendications précédentes, **caractérisée en ce que** la bande de matériau (1) est constituée d'un matériau non tissé ou d'une toison.

13. Housse de protection de siège de véhicule (2) selon la revendication 12, **caractérisée en ce que** la bande de matériau (1) constituée d'un matériau non tissé ou d'une toison présente un grammage de l'ordre de 12 g/m² à 60 g/m².

14. Housse de protection de siège de véhicule (2) selon l'une des revendications précédentes, **caractérisée en ce que** la bande de matériau (1) présente une perméabilité à l'air d'au moins 2000 mm/s.

15. Housse de protection de siège de véhicule (2) selon l'une des revendications 2 à 14, **caractérisée en ce que** la longueur totale des liaisons (36, 38) établies ou des les liaisons (36, 38) établies entre la couche avant (30) et la couche arrière (31) sur une housse de protection de siège de véhicule (2) est inférieure à 1400 mm.

16. Housse de protection de siège de véhicule (2) selon l'une des revendications précédentes, **caractérisée en ce que** l'extension latérale maximale de la bande de matériau (1) n'est pas supérieure à 1600 mm.

17. Housse de protection de siège de véhicule (2) selon l'une des revendications précédentes, **caractérisée en ce que** la bande de matériau (1) est conçue de manière antistatique.

18. Procédé de fabrication d'une house de protection de siège de véhicule (2) selon l'une des revendications précédentes, **caractérisé en ce que**
a) un produit semi-fini en forme de bande (59) est mis à disposition,
b) à partir du produit semi-fini en forme de bande (59), par découpe ou estampage, une bande de matériau (1) est réalisée, dont les bords latéraux (5, 6) présentent un contour concave (7, 8),
c) les zones latérales (14, 15) de la bande de matériau (1) sont pliés de façon à ce qu'ils constituent ensemble la couche arrière (31), tandis qu'une zone centrale (13) de la bande de matériau (1) constitue la couche avant (30),
d) les bords supérieurs des zones latérales (14, 15) de la bande de matériau (1) sont reliés avec le bord supérieur de la zone centrale (13) de la bande de matériau (1), avec lequel le bord supérrieur (3) au moins partiellement fermé de la poche supérieure (40) est réalisé,
e) les bords inférieurs des zones latérales (14, 15) de la bande de matériau (1) sont reliés avec le bord inférieur de la zone centrale (13) de la bande de matériau (1), avec lequel le bord inférieur (4) au moins partiellement fermé de la poche inférieure (41) est réalisé.

19. Procédé selon la revendication 18, **caractérisé en ce que**
a) une zone de liaison (61) entre les zones latérales (14, 15) de la bande de matériau (1) est réalisée avec la zone centrale (13) et
b) la zone de liaison (61) est divisée, par une séparation ou une perforation (63),
ba) en une liaison (38) qui relie, au niveau d'une première housse de protection de siège de véhicule (2a), les bords inférieurs des zones latérales (14a, 15a) de la bande de matériau (1a) avec le bord inférieur de la zone centrale (13a) et
bb) en une liaison (39) qui relie, au niveau d'une deuxième housse de protection de siège de véhicule (2b), les bords supérieures des zones latérales (14b, 15b) de la bande de matériau (1b) adjacente avec le bord supérette de la zone centrale (13b).

20. Procédé d'utlisation d'une housse de protection de siège de véhicule (2) selon l'une des revendications 1 à 17, **caractérisé en ce que**
a) la poche supérieure (40) de la housse de protection de siège de véhicule (2) est enfilée par-dessus le dossier du siège de véhicule et
b) la poche inférieure (41) de la housse de protection de siège de véhicule (2) est enfilée par-dessus un rembourrage du siège de véhicule.

21. Procédé selon la revendication 20, **caractérisé en ce qu'**une zone d'insertion (22) de la housse de protection de siège de véhicule (2) est introduite dans un interstice entre le dossier du siège de véhicule et le rambourrage du siège de véhicule.

22. Procédé selon la revendication 21, **caractérisé en ce que** la zone d'insertion (22) de la housse de protection de siège de véhicule (2) est fixée dans l'interstice entre le dossier du siège de véhicule et le rambourrage du siège de véhicule.
